# EUROPÄISCHE PATENTSCHRIFT

(11) **EP 2 801 461 B1**
(45) Veröffentlichungstag und Bekanntmachung des Hinweises auf die Patenterteilung: **10.07.2019**
(21) Anmeldenummer: 14164194.4
(22) Anmeldetag: 10.04.2014
(51) Int. Cl.: B29B 7/48, B29C 48/44, B29C 48/80, B29C 44/04, C08J 9/32, B29C 48/15, B29C 48/84, B29C 48/92, B29K 105/00, B29K 105/04

(54) **Verfahren zum Herstellen einer syntaktisch geschäumten Polymermasse, vorzugsweise einer druckempfindlichen Klebemasse**
Method for producing a syntactically foamed polymer composition, preferably a pressure-sensitive adhesive mass
Procédé de fabrication d'une masse polymère expansée syntactique, de préférence d'une masse collante sensible à la pression

(30) Priorität: 08.05.2013 DE 102013208445
(43) Veröffentlichungstag der Anmeldung: 12.11.2014
(73) Patentinhaber: tesa SE, 22848 Norderstedt (DE)
(72) Erfinder: Burmeister, Axel, 22527 Hamburg (DE); Czerwonatis, Franziska, 22393 Hamburg (DE)

(56) Entgegenhaltungen:
- EP-A1- 1 504 875
- EP-A2- 1 077 091
- EP-A2- 1 537 972
- WO-A1-2004/091889
- WO-A2-2005/049750
- DE-A1- 10 050 295
- DE-A1- 19 806 609
- DE-A1- 19 939 075
- DE-A1- 19 939 077
- DE-A1-102008 004 388
- DE-A1-102009 015 233
- DE-A1-102010 062 669
- US-B1- 6 797 371

## Beschreibung

Die Erfindung beschreibt Verfahren zum Herstellen einer syntaktisch geschäumten Polymermasse, vorzugsweise einer druckempfindlichen Klebemasse, wobei
a) zumindest die Mehrheit der abgeschlossenen Schaumhohlräume durch das Einleiten expandierbarer Mikroballons in ein Matrixmaterial und nachfolgendes Mischen erreicht wird und
b) die Expansion der expandierbaren Mikroballons nach deren Einleiten in das Matrixmaterial erfolgt,
c) wobei die Temperaturverteilung im mischenden Aggregat (1) inhomogen ist in einer Schnittebene quer zur Förderrichtung dieses Aggregates (1).

Beschrieben werden ferner zwei Vorrichtungen zur Durchführung des vorgenannten Verfahrens, ein Extrudat sowie ein Selbstklebeband, das gemäß vorgenanntem Verfahren hergestellt wird.

Das Wort "syntaktisch" meint, dass zumindest die peripheriefernen Schaumhohlräume vollständig von einem Matrixmaterial umgeben und dadurch abgeschlossen sind.

Mit expandierbaren Mikroballons geschäumte Selbstklebemassen sind bekannt. Gegenüber offenzellig geschäumten Selbstklebemassen erreichen sie mit ihren geschlossenen Zellen eine bessere Dichtung gegen Staub und Flüssigkeiten. Im Vergleich zu ungeschäumten Selbstklebemassen passen sie sich besser der Rauigkeit eines zu beklebenden Substrates an. Gegenüber mit Glashohlkugeln geschäumten Selbstklebemassen sind sie verformbarer und gleichen Wärmedehnungsunterschiede zwischen verschiedenen verklebten Materialien bei schwankenden Temperaturen besser aus und dämpfen und isolieren Vibrationen besser.

Wie dick die Hülle (= shell) der Mikroballons ist und aus welchem thermoplastischen Polymer sie besteht, beeinflusst genauso die mechanischen Eigenschaften des Schaums wie der Ausgangsdurchmesser (= unexpanded diameter) der Mikroballons und die Art des in deren Innerem angeordneten Treibmittels. Diese Größen beeinflussen auch die Expansions-Starttemperatur, die Expansionsgeschwindigkeit, das maximale Expansionsvermögen und die Robustheit der Mikroballons.

Eine Vielzahl expandierbarer Mikroballontypen ist käuflich; vorzugsweise werden für die Erfindung unexpandierte Typen eingesetzt, weil diese ein größeres Expansionsvermögen aufweisen als die bereits vorexpandierten Typen. In der Klasse der unexpandierten gibt es viele Typen von verschiedenen Herstellern; sie unterscheiden sich im Wesentlichen in ihrem Durchmesser (6 bis 9 µm bei den kleinsten Typen von Expancel, nämlich 461 DU 20, und 28 bis 38 µm bei den größten von Expancel, nämlich 920-, 930-, und 951 DU 120) und ihrer zum Expansionsstart benötigten Temperaturen (75 bis 220°C). Ein Beispiel für kommerziell erhältliche Mikroballons sind die Expancel® DU-Typen (DU = dry unexpanded) von der Firma Akzo Nobel.

Das Wort "gleichmäßig" (= "homogen") verwenden wir in dieser Anmeldung in dem Sinne, dass die spezifische Masse eines aus dem Erzeugnis entnommenen Probekörpers - dessen Kantenlänge natürlich wesentlich größer (also etwa mindestens 30-mal so groß) sein muss als der Durchmesser des größten expandierbaren Mikroballons darin - praktisch unabhängig davon ist, an welchem Orte des Erzeugnisses dieser Probekörper entnommen wird. Dieses Wort bedeutet also nicht etwa, dass alle expandierten Mikroballons gleich groß sein müssten; das könnten sie auch gar nicht, weil schon ihre Vorläufer, die unexpandierten Mikroballons, in einem statistischen Verfahren hergestellt werden, also eine gewisse Schwankungsbreite von individuellem Mikroballon zu individuellem Mikroballon sowohl in ihrem Durchmesser als auch in ihrer Wanddicke aufweisen.

Die Herstellung expandierbarer Mikroballons ist grundlegend beschrieben im US-Patent 3,615,972 von Dow.

Die DE 21 05 877 C offenbart ein Selbstklebeband mit einem Träger, der auf mindestens einer Seite mit einer mikrozellulären Selbstklebemasse (auch "druckempfindlicher Klebstoff" genannt) beschichtet ist. Diese Klebeschicht enthält einen Keimbildner, wobei die Zellen der Klebstoffschicht geschlossen und "gleichmäßig" in der Klebstoffschicht verteilt sind.

Die US-Patente 6,103,152 und 6,797,371, welche korrespondieren mit EP 1 102 809 B1, lehren ein Verfahren zur Herstellung von Polymerschaum mit expandierbaren Mikroballons. In einem öffentlichen Nichtigkeitsverfahren gegen den deutschen Teil des europäischen Patentes hat die Patentinhaberin vorgetragen, dass mit einem Schäumungsbeginn vor Verlassen der Düse - wobei hier aus dem Zusammenhang heraus ersichtlich die gestaltgebende Düse am Ende eines zweiten Extruders gemeint ist - tatsächlich ein Schäumungsbeginn in der Düse gemeint sei. Dem ist der deutsche Bundesgerichtshof in seiner Entscheidung "Polymerschaum" vom 17. Juli 2012 (Aktenzeichen: XZR 117/11, Absatz 31, letzter Satz) gefolgt.

Die EP 0 257 984 A1 beschreibt Selbstklebebänder, die zumindest einseitig eine geschäumte Klebeschicht aufweisen, die Mikroballons enthält. Laut Seite 3, Zeilen 38 bis 41, können die Mikroballons in ihrem unexpandierten Zustande in die Klebmasse eingemischt und durch eine spätere Erhitzung expandiert werden, oder - bevorzugt - erst expandiert und dann in die Klebmasse eingemischt werden.

Als weniger relevant erscheinen die weiteren Schriften DE 35 37 433 A1, WO 95/31225 A1, WO 95/32851 A1, EP 0 693 097 A1, WO 98/18878 A1 und DE 197 30 854 A1.

Die DE 10 2008 004 388 A1 lehrt ein Verfahren zur Herstellung einer ungeschäumten Selbstklebemasse mit Naturkautschuk als Basispolymer. In diesem Zusammenhange lehren die Beispiele 5 und 6 auf den Seiten 23 und 24 ein Herstellungsverfahren unter Verwendung unter anderem eines Planetwalzenextruders. Wenn die dortigen "Heizzonen" als die beiden radial äußeren, stehenden Hohlräder eines zweischüssigen Planetwalzenextruders gedeutet werden, ist dort vorgeschlagen, dass in beiden Schüssen das Hohlrad auf 50°C temperiert ist, während das Sonnenrad (= Zentralspindel) nur auf 10°C temperiert ist.

EP 1 537 972 A2 betrifft eine Temperierung für eine Kunststoffverarbeitungsanlage, die mindestens einen Mantel umfasst, in dem eine angetriebene Schnecke oder Spindel angeordnet ist. In dem Mantel ist ferner mindestens ein Kanal vorgesehen, der zur Aufnahme eines Temperiermediums geeignet ist. An der Außenseite des Mantels ist als zusätzliche Temperierung mindestens ein Heizelement angeordnet. Zur Temperierung soll mittels des Heizelements dem Mantel Wärme zugeführt und über das in den Kanal zugeführte Temperiermedium zusätzlich Wärme zu- oder abgeführt werden.

Der Erfindung liegt die Aufgabe zugrunde, die Homogenität der Mischung aus Mikroballons und Matrixmischung mindestens gegenüber den bislang bekannten Erzeugnissen - von denen die gemäß EP 1 102 809 B1 hergestellten als die nächstkommenden erscheinen - beizubehalten bei einem Prozess, der die Matrixpolymere weniger thermisch und mechanisch belastet. Das gesuchte Mischverfahren soll die Quote zerstörter Mikroballons nicht vergrößern, vorzugsweise weiter verkleinern. Vorzugsweise soll dabei die Rautiefe schon des geschäumten Extrudates verringert sein.

Zu seiner Überraschung hat der Erfinder - indem er Erscheinungen nachging, die zunächst für Messfehler gehalten wurden - herausgefunden, dass das homogene Verteilen von Mikroballons besonders gut und effizient gelingt, wenn die Temperaturverteilung im mischenden Aggregat inhomogen ist quer zur Förderrichtung dieses Aggregates. Gegenstand der Erfindung ist ein Verfahren gemäss Anspruch 1 zum Herstellen einer syntaktisch geschäumten Polymermasse, vorzugsweise einer druckempfindlichen Klebemasse, wobei
a) zumindest die Mehrheit der abgeschlossenen Schaumhohlräume durch das Einleiten expandierbarer Mikroballons in ein Matrixmaterial und nachfolgendes Mischen in einem mischenden Aggregat (1) erreicht wird und
b) die Expansion der expandierbaren Mikroballons nach deren Einleiten in das Matrixmaterial erfolgt
   dadurch gekennzeichnet,
c) dass die Temperaturverteilung im mischenden Aggregat (1) inhomogen ist in einer Schnittebene quer zur Förderrichtung dieses Aggregates (1),
d) dass in einem Schnitt quer zur Förderrichtung des mischenden Aggregates (1) eine erste den Mischraum (2) begrenzende Oberfläche (3) des mischenden Aggregates (1) so hoch temperiert ist, dass in der Mikroballons enthaltenden Polymermasse, insoweit sie in Kontakt mit dieser ersten begrenzenden Oberfläche (3) gerät, die Temperatur (T_{E}), die zum Start und Fortschritt der Expansion ausreicht, erreicht wird,
e) während im selben Schnitt quer zur Förderrichtung des mischenden Aggregates (1) eine zweite den Mischraum (2) begrenzende Oberfläche (4) des mischenden Aggregates (1) so niedrig temperiert ist, dass in der Mikroballons enthaltenden Polymermasse, insoweit sie in Kontakt mit dieser zweiten begrenzenden Oberfläche (4) gerät, die Temperatur (T_{E}), die zum Start und Fortschritt der Expansion ausreicht, nicht erreicht wird.

In einem Einschneckenextruder als mischendes Aggregat empfiehlt es sich, den erfindungsgemäßen Temperaturunterschied zwischen Schnecke und Gehäuse (= barrel) vorzusehen. Wenn als Matrixbasispolymer - ggf. neben einem klebrigkeitssteigernden Harz - Acrylate und/oder Methacrylate verwendet sind, empfiehlt es sich, die Temperaturdifferenz so herum zu orientieren, dass
I: die Schnecke kühler ist als das Gehäuse (= barrel) und zwar vorzugsweise um mindestens 50°C, besonders vorzugsweise um einen Betrag zwischen 65°C und 90°C. Wenn jedoch als Matrixbasispolymer - ggf. neben einem klebrigkeitssteigernden Harz - Polyethylen und/oder Polypropylen und/oder Polyethylenvinylacetat und/oder Polypropylenvinylacetat und/oder Mischpolymerisate aus einigen oder allen der genannten Monomeren verwendet sind, empfiehlt es sich, die Temperaturdifferenz umgekehrt herum zu orientieren, also so, dass
II: die Schnecke heißer ist als das Gehäuse (= barrel); der bevorzugte Betrag der Temperaturdifferenz bleibt aber gleich, nämlich mindestens 50°C, besonders bevorzugt zwischen 65°C und 90°C.

In einem Zweischneckenextruder als mischendem Aggregat sind verschiedene Möglichkeiten gegeben zur Darstellung des gewünschtermaßen inhomogenen Temperaturfeldes in einer Ebene quer zur Förderrichtung, nämlich bei Differenzierung nur zwischen heiß und kalt:
III: eine Schnecke kalt, die andere heiß, Gehäuse kalt,
IV: eine Schnecke kalt, die andere heiß, Gehäuse heiß,
V: beide Schnecken kalt, Gehäuse heiß,
VI: beide Schnecken heiß, Gehäuse kalt.

Mit "heiß" ist dabei jeweils eine solche Bauteiltemperatur gemeint, die eine mit diesem Bauteil in Kontakt geratende, expandierbare Mikroballons enthaltende Masse für eine Expansion genügend erhitzt, wohingegen "kalt" eine solche Bauteiltemperatur meint, die mit diesem Bauteil in Kontakt geratende, expandierbare Mikroballons enthaltende Masse zu kalt werden lässt für eine Expansion.

Die Möglichkeit V wird bevorzugt, wenn als Matrixbasispolymer - ggf. neben einem klebrigkeitssteigernden Harz - Acrylate und/oder Methacrylate verwendet sind. Auch hierbei beträgt der bevorzugte Betrag der Temperaturdifferenz mindestens 50°C, besonders bevorzugt zwischen 65°C und 90°C.

Die Möglichkeit VI wird hingegen bevorzugt, wenn als Matrixbasispolymer - ggf. neben einem klebrigkeitssteigernden Harz - Polyethylen und/oder Polypropylen und/oder Polyethylenvinylacetat und/oder Polypropylenvinylacetat und/oder Mischpolymerisate aus einigen oder allen der genannten Monomeren verwendet sind. Auch hierbei beträgt der bevorzugte Betrag der Temperaturdifferenz mindestens 50°C, besonders bevorzugt zwischen 65°C und 90°C.

Diese Auswahl von Orientierungen vermeidet sowohl Verkantungen in den Lagerungen der Schneckenoder Spindeln als auch Verstopfungen im Einfüllschacht.

In einem Planetwalzenextruder - der zur industriellen Verwertung der Erfindung bevorzugt wird, erstens weil hier bei kompakter Bauweise und dennoch großer zur Temperatursteuerung zur Verfügung stehenden Oberfläche die gewünschte Temperatur-Inhomogenität in einem besonders weiten Bereich reproduzierbar eingestellt werden kann, und zweitens weil die ringfömige Struktur dieses Gerätetyps trotz der inhomogenen Temperaturverteilung vermeidet, dass durch unterschiedliche Wärmedehnungen Verkantungen in Lagern entstehen - sind viele verschiedene Orientierungen von Temperaturunterschieden erzeugbar. Die Bauweise eines Planetwalzenextruders bleibt besonders einfach, wenn auf eine aktive Temperierung ("Temperierung" wird in dieser Anmeldung als Oberbegriff von "Heizung" und "Kühlung" verstanden) der Planetenräder verzichtet wird. Damit entfallen zwar sehr viele Orientierungsmöglichkeiten, aber folgende zwei verbleiben:
VII: kühles Sonnenrad (Zentralspindel) und heißes Hohlrad oder
VIII: heißes Sonnenrad (Zentralspindel) und kühles Hohlrad.

Analog zur Möglichkeit I beim Einschneckenextruder und zur Möglichkeit V beim Doppelschneckenextruder wird beim Planetwalzenextruder die Möglichkeit VII bevorzugt, wenn als Matrixbasispolymer - ggf. neben einem klebrigkeitssteigernden Harz - Acrylate und/oder Methacrylate verwendet sind. Auch hierbei beträgt der bevorzugte Betrag der Temperaturdifferenz mindestens 50°C, besonders bevorzugt zwischen 65°C und 90°C.

Und analog zur Möglichkeit II beim Einschneckenextruder und zur Möglichkeit VI beim Doppelschneckenextruder III wird beim Planetwalzenextruder die Möglichkeit VIII bevorzugt, wenn als Matrixbasispolymer - ggf. neben einem klebrigkeitssteigernden Harz - Polyethylen und/oder Polypropylen und/oder Polyethylenvinylacetat und/oder Polypropylenvinylacetat und/oder Mischpolymerisate aus einigen oder allen der genannten Monomeren verwendet sind. Auch hierbei beträgt der bevorzugte Betrag der Temperaturdifferenz mindestens 50°C, besonders bevorzugt zwischen 65°C und 90°C.

Der Erfinder hat herausgefunden, dass die Möglichkeit VII eine weitgehende Expansion der Mikroballons im Planetwalzenextruder schon während des Mischens erlaubt. Eine so frühzeitige Expansion wurde vorher für unmöglich gehalten, weil eine zu große Menge zerstörter Mikroballons befürchtet wurde, deren Hüllendicke im expandierten Zustande schließlich nur bei etwa 0,02 µm liegt. Hierzu wird also das innenverzahnte Hohlrad (7) des Planetwalzenextruders (1) so hoch temperiert, dass in der Mikroballons enthaltenden Polymermasse, insoweit sie in Kontakt mit diesem Hohlrad gerät, die Temperatur, die zum Start und Fortschritt der Expansion ausreicht, erreicht wird. Währenddessen soll die außenverzahnte Zentralspindel (5) so niedrig temperiert sein, dass in der Mikroballons enthaltenden Polymermasse, insoweit sie in Kontakt mit dieser Zentralspindel gerät, die Temperatur, die zum Start oder Fortschritt der Expansion ausreicht, nicht erreicht wird.

Sofern nicht später für andere Zwecke - sei es zum Austrieb restlicher Gase wie Luft, Restlösungsmitteldämpfe, Restmonomere, Wasserdampf - die Temperatur der Masse so hoch und der auf ihr lastende Druck so niedrig sein muss, dass dabei auch eine weitere Expansion der Mikroballons unvermeidlich ist, können die Prozessbedingungen während des Mischens im Planetwalzenextruder (insbesondere Gehäusetemperatur, Zentralspindeltemperatur, Drehzahl, Füllungsgrad und Druck) so gewählt werden, dass das im Mittel technisch sinnvolle Expansionsvermögen - das gegeben ist bei Erreichung von etwa ¾ desjenigen Volumens, welches unter feinsten Laborbedingungen maximal erreicht werden könnte - bereits vollständig bis zum Abschluss des Mischens ausgeschöpft wird.

Passend zur eingesetzten Mikroballontype mit ihrer Schäumungstemperatur kann also beim Mischen ein solches Temperaturprofil in radialer und longitudinaler Richtung angewandt werden, dass das Schäumen bereits während des Mischens zumindest beginnt. Der Erfinder erklärt sich den erstaunlichen Effekt - nämlich dass die Mikroballons ihren Expansionsbeginn schon während des Mischens so unbeschadet überleben - damit, dass zwischen den Planetwalzen und dem Hohlrad eine besonders sanfte Schmiegung besteht. Im Vergleich zu zwei miteinander kämmenden Außenverzahnungen tauchen die Zähne der Planetwalzen allmählicher und sanfter - insbesondere mit sanfteren Scherungsspitzen - in die Zahnlücken des Hohlrades ein und ziehen sich auch genauso sanfter wieder zurück hinter dem Punkt des tiefsten Eintauchens. Das Gleiche gilt analog für die Zähne des Hohlrades beim Eintauchen in und Herauslaufen aus den Zahnlücken der Planetwalzen.

Der Erfinder vermutet ferner, dass das gröbere Kämmen der Planetwalzen mit dem Sonnenrade die Mikroballons kaum beeinträchtigt, weil in diese Kontaktzone aufgrund der dort kühleren Temperaturen die zu mischende Masse - zumindest gilt das für die bislang hierfür ausprobierten Acrylat- und Acrylat-Methacrylat-Haftklebemassen - weniger haftfreudig ist und sich deshalb dort weniger Masse aufhält. Im Übrigen ist selbst dieser Kontakt von der Höhe der Scherspitzen her nicht mit einem gleichläufigen Doppelschneckenextruder zu vergleichen sondern nur mit einem - abgesehen von der PVC-Verarbeitung her unüblichen - gegenläufigen, also im Radialschnitt kämmenden und nicht scheinbar schlupfenden, Doppelschneckenextruder. Die dem gegenläufigen Extruder nachgesagte Verstopfungsneigung ist am Planetwalzenextruder nicht zu beobachten - der Erfinder vermutet: wegen der fehlenden starren Umschließung von Planetwalzen und Sonnenwalze - und auch die üblicherweise beklagte geringere Mischwirkung tritt in Verbindung mit der erfindungsgemäßen inhomogenen der Temperaturführung in einer Ebene quer zur Förderrichtung des Mischaggregates nicht auf.

Die erzielte Erleichterung in der Erreichung einer homogenen Mischung wird besonders deutlich, wenn die Temperaturdifferenz zwischen dem heißeren Hohlrad (7) und der kühleren Zentralspindel (5) mindestens 50°C beträgt. Besonders bevorzugt ist eine Temperaturdifferenz zwischen 65°C und 90°C, zumal dann der Expansionsbeginn schon während des Mischens besonders sicher beherrscht wird. Noch größere Temperaturdifferenzen erweisen sich hingegen als für den zu erzielenden Effekt überflüssig und stellen nur einen unnötigen Kostenaufwand für unnötig intensives Heizen und vor Allem unnötig intensives Kühlen dar. Die Erfindung ermöglicht unter Hinnahme zusätzlicher Aufwendungen für Kühlung und Heizung eine besonders hohe Homogenität der Mischung sowie in bevorzugter Weiterbildung der Erfindung einen besonders frühen Start der Expansion bei besonders genauer Steuerung des Expansionsgrades und besonders geringer Quote zerstörter Mikroballons. Der frühere Beginn der Expansion erlaubt auch eine frühere Beendigung der Expansion; dies hat nicht nur einen Kostenvorteil sondern erlaubt auch ein kühleres Passieren der formgebenden Extrusionsdüse mit den weiteren Vorteilen geringerer Abmessungstoleranzen im fertigen Erzeugnis und glatterer Oberfläche. Schon ohne zusätzliche Glättungsmaßnahmen - wie etwa nachfolgendes Kaschieren mit einem hochglatten Liner und/oder Kalandrieren, evt. erst nach dem Liner-Auftrag - werden so am Extrudat Rautiefen unter 12 µm erreicht, bei besonderer Sorgfalt bis herunter zu 5 µm.

Das durch die erfindungsgemäße Temperaturinhomogenität erleichterte und verbesserte Mischen schont nicht nur die Mikroballons sondern - wie beabsichtigt - auch die Matrixpolymere durch insgesamt geringere mechanische Belastung und geringere Temperaturbelastung. So bleibt die Polymerdegradation geringer. Der Kostenvorteil durch raschere Beendbarkeit des Mischens und Expandierens sowie die erzielten Qualitätsvorteile überwiegen den Kostennachteil durch höheren Heiz- und Kühlaufwand.

Die im erfindungsgemäßen Erzeugnis die Mikroballons umgebende Matrix enthält im Wesentlichen Polymere. Wenn die Matrix selbstklebend sein soll, enthält sie bevorzugt Acrylaten und/oder Methacrylaten und/oder Polyolefinen und/oder Naturkautschuk und/oder Styrol-Butadien-Kautschuk, bevorzugt zudem ein oder mehrere klebrigkeitsfördernde Harze. Auch der Einsatz thermoplastischer Elastomere wie Styrolblockcopolymere - zum Beispiel Styrol-Isopren-Styrol (SIS)- und Styrol-Butadien-Styrol (SBS)-Typen - ist möglich.

Als klebrigkeitsfördernde Harze kommen oligomere und niedrig-polymere Verbindungen in Frage mit einem zahlenmittleren Molekulargewicht Mₙ bis zu 5000 g/mol. In Frage kommen insbesondere Pinen-, Inden- und Kolophoniumharze, deren disproportionierte, hydrierte, polymerisierte, veresterte Derivate und Salze, die aliphatischen und aromatischen Kohlenwasserstoffharze, Terpenharze und Terpenphenolharze sowie C5-, C9- sowie andere Kohlenwasserstoffharze, jeweils für sich oder in Kombination miteinander. Besonders vorteilhaft lassen sich alle in der Polymermasse löslichen Harze einsetzen wie alle aliphatischen, aromatischen, alkylaromatischen Kohlenwasserstoffharze, sowie Kohlenwasserstoffharze auf Basis reiner Monomere, hydrierte Kohlenwasserstoffharze, funktionelle Kohlenwasserstoffharze und Naturharze. Bevorzugte Terpenphenolharze sind Dertophene T105 und Dertophene T110, ein bevorzugtes hydriertes Kolophoniumderivat ist Foral 85. Der Harzanteil wird mit Rücksicht auf die erreichbaren Scherstandzeiten so niedrig wie möglich und mit Rücksicht auf die für die Anwendung erforderliche Anfassklebrigkeit (= Tack) und Schwingungsdämpfung so hoch wie nötig dosiert.

Ferner können Weichmacher zugesetzt sein wie etwa niedermolekulare Polyacrylate, Polymethacrylate, Phthalate und Polyphosphate zur weiteren Erhöhung der Verformbarkeit, Schlagzähigkeit und des Schwingungsdämpfungsvermögens, oft einhergehend mit einer kleinen Tack-Erhöhung.

Für die meisten Anwendungen ist zudem eine Vernetzung des Matrixmateriales zweckmäßig. Auch wenn eine solche Vernetzung vorteilhafterweise erst am Ende des Verfahrens durchgeführt wird, so muss sie doch in der Auswahl der zu Beginn eingesetzten Materialien berücksichtigt werden. So kann die Zugabe eines Vernetzungsmittels wie Schwefel oder Peroxyd bei Einsatz von Natur-, Isopren- oder SBR-Kautschuk sinnvoll sein und/oder bei Verwendung anderer Polymere der Einbau - vorzugsweise schon bei den zur Polymerherstellung eingesetzten Monomeren - solcher funktioneller Gruppen, die später miteinander vernetzt werden können. In Frage kommen hierfür insbesondere olefinisch ungesättigte Monomere mit funktionellen Gruppen, die eine Reaktion mit Epoxidgruppen eingehen können. Bevorzugt werden hierfür Monomere mit funktionellen Gruppen aus folgenden Klassen: Hydroxy-, Carboxy-, Sulfonsäure-, Phosphonsäuregruppen, Säureanhydride, Epoxide und Amine. Besonders bevorzugte Beispiele für solche Monomere sind Acrylsäure, Methacrylsäure, Itaconsäure, Maleinsäure, Fumarsäure, Crotonsäure, Aconitsäure, Dimethylacrylsäure, β-Acryloyloxypropionsäure, Trichloracrylsäure, Vinylessigsäure, Vinylphosphonsäure, Itasconsäure, Maleinsäureanhydrid, Hydroxyethylacrylat, Hydroxypropylacrylat, Hydroxyethylmethacrylat, Hydroxypropylmethacrylat, 6-Hydroxyhexylmethacrylat, Allylalkohol, Glycidylacrylat und Glycidylmethacrylat.

Wie an sich bekannt, sind Vernetzungsreaktionen durch Energiezufuhr initiierbar, nämlich durch UV-Strahlung, Elektronenstrahlung oder Erhitzung. Passend zur gewünschten Energieart sind die in die Matrix einzumischenden Vernetzungsinitiatoren auszuwählen. Wenn die Vernetzungsreaktion thermisch ausgelöst werden soll - wie das für die Herstellung solcher Erzeugnisse zu bevorzugen ist, bei denen eingefärbte und deshalb nur wenig oder fast gar nicht transparente Massen verarbeitet werden sollen oder bei denen Schichtdicken oberhalb von etwa 160 µm erzeugt werden sollen - dann sollte vorzugsweise die eingesetzte Mikroballontype, die Temperaturführung sowie der Zugabeort des Initiators so aufeinander abgestimmt sein, dass die Vernetzung nicht allzu weit vor der Gestaltgebung - geschehe sie nun in einer Form (= mold), einer Kalanderwalze und/oder einer Extrusionsdüse - beginnt. Als thermisch aktivierbare Vernetzer eignen sich für die besonders bevorzugten Acrylate und Methacrylate insbesondere Isocyanate und Epoxidverbindungen.

Auch können Beschleuniger und/oder Verzögerer der Vernetzungsreaktion zweckmäßig zugesetzt sein, Verzögerer insbesondere dann, wenn der Vernetzer zur Minimierung des zeitlichen und apparativen Mischaufwandes bereits am Anfang des Extruders zugegeben wird, dabei hinnehmend dass er im radial äußeren Bereich des bevorzugt eingesetzten Planetwalzenextruders schon beim Mischen Temperaturen ausgesetzt wird, die die Vernetzung bereits beginnen lassen. Alternativ oder zusätzlich zum Einsatz von Verzögerern kommt der Einbau einer Blockierung oder sterischen Hinderung im vernetzenden Isocyanat in Frage, z. B. durch Alkohole, Phenolderivate oder Amine. Vorzugsweise wird - insbesondere, wenn in der zu bedienenden Anwendung eine gewisse Vergilbungsneigung nicht stört - etwas mehr Verzögerung betrieben, als für den oben beschriebenen Zweck erforderlich, um diesem Überschuss antagonistisch ein wenig Vernetzungsbeschleuniger - wie etwa Amine - in der Mischung gegenüber stellen zu können. In der Regel ergibt sich dann eine geringere Empfindlichkeit des zeitlichen Vernetzungsverlaufes gegenüber nie ganz zu vermeidenden Schwankungen im Verfahrensablauf und dadurch noch geringere Schwankungen in der Erzeugnisqualität.

Wenn der Planetwalzenextruder in mehrere Schüsse (= modules) unterteilt ist und der Vernetzer thermisch zu aktivieren ist und er auch in kurzer Mischstrecke hinreichend homogen verteilbar ist, dann wird allerdings die Zugabe des Vernetzers in einem der späteren Schüsse des Planetwalzenextruders oder gar in einem nachgeschalteten weiteren Extruder bevorzugt, weil so die für das Mischen und Schäumen besonders zweckmäßige Verfahrensführung weniger Rücksicht auf den Vernetzer und auf die durch sein zu frühes und/oder zu heftiges Vernetzen mit einhergehender Viskositätserhöhung zu nehmen braucht.

Bezüglich ihrer Gestaltung des jeweiligen Hohlrades und darin kämmenden Planetwalzen sieht jeder Schuss eines mehrschüssigen Planetwalzenextruders aus wie ein eigenständiger (einschüssiger) Planetwalzenextruder; aber die verschiedenen Schüsse durchzieht eine einzige durchgehende Zentralspindel. Im Unterschied zu vier hintereinander angeordneten einschüssigen Planetwalzenextrudern, wo für jede der vier Zentralspindeln ein Motor und ein Getriebe erforderlich ist, erfordert ein vierschüssiger Planetwalzenextruder nur einen Motor und nur ein Getriebe. Auch wenn diese entsprechend stärker dimensioniert sein müssen, führt der eine einzige stärkere Antrieb zu einem günstigeren Wirkungsgrad als vier schwächere Antriebe, bedingt ein geringeres Ausfallrisiko und kleinere Wartungskosten. Bevorzugt enthält der Polymerschaum zu mindestens 25 Gew.-%, bezogen auf das Gesamtgewicht des Polymerschaums, ein acrylisches Polymer - sei es nun ein Polyacrylat oder Polymethacrylat oder Poly(acrylat-co-methacrylat) oder ein Copolymer - welches auf die folgende Monomerzusammensetzung zurückgeführt werden kann:
(a) Acrylsäureester und/oder Methacrylsäureester der folgenden Formel

   CH₂ = C(R^{I})(COOR^{II}),

   wobei R^{I} = H oder CH₃ und R^{II} ein Alkylrest mit 4 bis 14 C-Atomen ist,
(b) in kleineren Mengen olefinisch ungesättigte Monomere mit funktionellen Gruppen, die eine Reaktivität mit den Vernetzersubstanzen oder einem Teil der Vernetzersubstanzen aufweisen, wie zwei Absätze zuvor detaillierter aufgezählt,
(c) optional - in kleineren Mengen - andere Acrylate und/oder Methacrylate als (a) und/oder
(d) optional weitere Monomere, die olefinisch ungesättigt und mit der Komponente (a) copolymerisierbar sind.

Die Worte "in kleineren Mengen" meint Dosierungen, bei denen der Gewichtsanteil der dosierten Komponente weniger als ein Viertel derjenigen der Komponente (a) ist.

Die Verbindungen der Gruppe (a) werden im Rahmen dieser Anmeldung als "Acrylmonomere" bezeichnet. Vorzugsweise werden solche Acrylmonomere verwendet, deren Alkylgruppen 4 bis 9 C-Atome enthalten. Beispiele für derartige Monomere sind n-Butylacrylat, n-Butylmethacrylat, n-Pentylacrylat, n-Pentylmethacrylat, n-Amylacrylat, n-Hexylacrylat, n-Hexylmethacrylat, n-Heptylacrylat, n-Octylacrylat, n-Octylmethacrylat, n-Nonylacrylat, n-Nonylmethacrylat, Isobutylacrylat, Isobutylmethacrylat, Isooctylacrylat, Isooctylmethacrylat, und deren verzweigte Isomere, wie zum Beispiel 2-Ethylhexylacrylat und 2-Ethylhexylmethacrylat.

Ferner gehören zur Gruppe (a) auch Dodecylmethacrylat, Laurylacrylat, n-Undecylacrylat, n-Tridecylacrylat, sec.-Butylacrylat, tert.-Butylacrylat, Isodecylacrylat,; auch diese Monomere kommen zum Copolymeraufbau in Frage.

Für Polymere, die die Komponente (c) und/oder (d) enthalten, können prinzipiell alle vinylisch funktionalisierten Verbindungen eingesetzt werden, die mit der Komponente (a) und/oder der Komponente (b) copolymerisierbar sind. Bevorzugt dienen diese Monomere auch zur Einstellung der Eigenschaften des resultierenden Polymerschaums. Beispielhaft seien folgende Monomere für die Komponente (c) aufgeführt:
Methylacrylat, Ethylacrylat, Propylacrylat, Methylmethacrylat, Ethylmethacrylat, Benzylacrylat, Benzylmethacrylat, Phenylacrylat, Phenylmethacrylat, Isobornylacrylat, Isobornylmethacrylat, t-Butylphenylacrylat, t-Butylphenylmethacrylat, Stearylacrylat, , Behenylacrylat, Cyclohexylmethacrylat, Cyclopentylmethacrylat, Phenoxyethylacrlylat, Phenoxyethylmethacrylat, 2-Butoxyethylmethacrylat, 2-Butoxy-ethylacrylat, 3,3,5-Trimethylcyclohexylacrylat, 3,5-Dimethyladamantylacrylat, 4-Cumyl-phenylmethacrylat, Cyanoethylacrylat, Cyanoethylmethacrylat, 4-Biphenylacrylat, 4-Biphenylmethacrylat, 2-Naphthylacrylat, 2-Naphthylmethacrylat, Tetrahydrofurfuryl-acrylat, Diethylaminoethylacrylat, Diethylaminoethylmethacrylat, Dimethylaminoethyl-acrylat, Dimethylaminoethylmethacrylat, 2-Butoxyethylacrylat, 2-Butoxyethylmethacrylat, 3-Methoxyacrylsäuremethylester, 3-Methoxybutylacrylat, Phenoxyethylacrlylat, Phenoxy-ethylmethacrylat, 2-Phenoxyethylmethacrylat, Butyldiglykolmethacrylat, Ethylen-glycolacrylat, Ethylenglycolmonomethylacrylat, Methoxy Polyethylenglykolmethacrylat 350, Methoxy Polyethylenglykolmethacrylat 500, Propylenglycolmonomethacrylat, Butoxydiethylenglykolmethacrylat, Ethoxytriethylenglykolmethacrylat, Octafluoropentyl-acrylat, Octafluoropentylmethacrylat, 2,2,2-Trifluoroethylmethacrylat, 1,1,1,3,3,3-Hexa-fluoroisopropylacrylat, 1,1,1,3,3,3-Hexafluoroisopropylmethacrylat, 2,2,3,3,3-Pentafluoro-propylmethacrylat, 2,2,3,4,4,4-Hexafluorobutylmethacrylat, 2,2,3,3,4,4,4-Heptafluorobutylacrylat, 2,2,3,3,4,4,4-Heptafluorobutylmethacrylat, 2,2,3,3,4,4,5,5,6,6,7,7,8,8,8-Pentadecafluorooctylmethacrylat oder Makromonomere wie 2-Polystyrolethylmethacrylat (Molekulargewicht Mw von 4000 bis 13000 g/mol), Poly(Methylmethacrylat)ethylmethacrylat (Mw von 2000 bis 8000 g/mol).

Beispielhaft seien folgende Monomere für die Komponente (d) aufgeführt: Dimethylaminopropylacrylamid, Dimethylaminopropylmethacrylamid, N-(1-Methylundecyl)acrylamid, N-(n-Butoxymethyl)acrylamid, N-(Butoxymethyl)methacrylamid, N-(Ethoxymethyl)acrylamid, N-(n-Octadecyl)acrylamid, weiterhin N,N-Dialkyl-substituierte Amide, wie beispielsweise N,N-Dimethylacrylamid, N,N-Dimethylmethacrylamid, N-Benzylacrylamide, N-Isopropylacrylamid, N-tert-Butylacrylamid, N-tert-Octylacrylamid, N-Methylolacrylamid, N-Methylolmethacrylamid, Acrylnitril, Methacrylnitril, Vinylether, wie Vinylmethylether, Ethylvinylether, Vinylisobutylether, Vinylester, wie Vinylacetat, Vinylchlorid, Vinylhalogenide, Vinylidenchlorid, Vinylidenhalogenide, Vinylpyridin, 4-Vinylpyridin, N-Vinylphthalimid, N-Vinyllactam, N-Vinylpyrrolidon, Styrol, a- und p-Methylstyrol, a-Butylstyrol, 4-n-Butylstyrol, 4-n-Decylstyrol, 3,4-Dimethoxystyrol.

Monomere der Komponente (c) können vorteilhaft auch derart gewählt werden, dass sie funktionelle Gruppen enthalten, die eine nachfolgende strahlenchemische Vernetzung (beispielsweise durch Elektronenstrahlen, UV) unterstützen. Geeignete copolymerisierbare Photoinitiatoren sind zum Beispiel Benzoinacrylat und acrylatfunktionalisierte Benzophenonderivate. Monomere, die eine Vernetzung durch Elektronenbestrahlung unterstützen, sind zum Beispiel Tetrahydrofurfurylacrylat, N-tert-Butylacrylamid und Allylacrylat.

Besonders vorteilhaft enthält ein die Matrix bildendes Polymer einpolymerisiert auch Acryl- und/oder Methacrylsäure.

Für eine bevorzugte Anwendung des Polymerschaums als Haftkleber sind die Anteile der entsprechenden Komponenten (a), (b), (c) und (d) vorzugsweise derart gewählt, dass das Polymerisationsprodukt eine Glastemperatur ≤ 15°C (DMA bei geringen Frequenzen) aufweist. Dazu ist es vorteilhaft, die Monomere der Komponente (a) mit einem Anteil von 45 bis 99 Gew.-%, die Monomere der Komponente (b) mit einem Anteil von 1 bis 15 Gew.-% und die Monomere der Komponenten (c) und (d) mit einem Anteil von 0 bis 40 Gew.-% zu wählen, wobei die Angaben auf die Monomermischung für das "Basispolymer", also ohne Zusätze eventueller Additive zu dem fertigen Polymer wie Harze etc. bezogen sind.

Für eine Anwendung des Polymerschaums als Heißschmelzkleber, also als ein Material, welches erst durch Erwärmen haftklebrig wird, werden die Anteile der entsprechenden Komponenten (a), (b), (c) und ggf. (d) vorzugsweise derart gewählt, dass das Copolymer eine Glasübergangstemperatur (T_{G}) zwischen 15°C und 100°C aufweist, stärker bevorzugt zwischen 30°C und 80°C und besonders bevorzugt zwischen 40°C und 60°C.

Die Matrix kann auch Füllstoffe wie Titandioxid, Zinkoxid, Ruß, Kreide (= Kalziumcarbonat, CaCO₃) und sonstige Zusätze wie Alterungsschutzmittel, Flammhemm-Mittel, Fungizide und dergleichen enthalten. Zudem ist es möglich neben den expaniderbaren Mikroballons - also solchen mit polymerer Hülle und einem Treibmittel darin, welches vorzugsweise durch Verdampfung eine große Volumenzunahme ermöglicht - auch nicht-expandierbare Mikroballons einzusetzen, zum Beispiel Mikroglashohlkugeln.

Es ist üblich, die vorgenannten Bestandteile, die gegenüber den im Verfahren auftretenden Temperaturen, Drücken und Scherspannungen als unempfindlicher gelten als die Mikroballons, zuerst zu mischen und die als empfindlicher geltenden Mikroballons - ggf. zusammen mit thermisch ebenfalls empfindlichen Vernetzern und evt. Vernetzungsverzögerern später zuzumischen. Diese Art der Schonung der Mikroballons schont aber nicht das Budget des Herstellers, weil dadurch die Gesamtmischzeit und die Gesamtlänge des erforderlichen Mischaggregates recht lang wird, und sie schont vor allem auch nicht die Matrixpolymere, die einer relativ langen mechanischen und thermischen Belastung ausgesetzt werden.

Nach der Beschreibung der Grundzüge und wichtigsten Weiterbildungen des erfindungsgemäßen Verfahrens nun zur dafür geeigneten Vorrichtung:
Das Hohlrad des Planetwalzenextruders wird auch als "toothed barrel" oder "Gehäuse" oder "Hohlwalze" oder "Walzenmantel", "innenverzahnter Zylinder", und dergleichen bezeichnet; es gibt da eine beträchtliche Begriffsvielfalt. Egal, wie es genannt wird, sein Stillstehen erleichtert sowohl sein Beheizen als auch sein Kühlen. Zum Beheizen des Hohlrades - insbesondere zur Verarbeitung von Acrylaten jeglicher Art als Basispolymer bevorzugt, wie bereits an früherer Stelle näher ausgeführt - und ohnehin aus anderen Prozessen genügend heißes Wasser oder Dampf zur Verfügung steht, sollte heißes Wasser beziehungsweise Dampf verwendet werden, ansonsten Elektroheizdrähte. Zum Kühlen des Hohlrades - insbesondere zur Verarbeitung von überwiegend polyolefinsichen Massen bevorzugt, wie bereits an früherer Stelle näher ausgeführt - , sollte in den Flüssigkeitskanälen des Gehäuses kaltes Wasser kreisen, das durch ein in Reihe geschaltetes Kühlaggregat - vorzugsweise nach dem Linde-Prinzip arbeitend - und eine Umwälzpumpe fließt.

Zur Herstellung des erfindungsgemäßen Temperaturgefälles im Radialschnitt des Extruders wird zweckmäßigerweise auch das Sonnenrad (= Sonnenwalze = Zentralspindel) aktiv temperierbar ausgeführt; insbesondere zur Verarbeitung von Acrylaten jeglicher Art als Basispolymer, sollte - wie bereits an früherer Stelle näher ausgeführt - dem Sonnenrade Wärme entzogen werden. Dazu sollte eine Kühleinrichtung darin angeordnet werden, vorzugsweise Kaltwasserkanäle. Diese Kaltwasserkanäle sollten mit einem externen Kälteerzeuger - vorzugsweise nach dem Linde-Prinzip arbeitend - verbunden sein.

In der Regelvorrichtung der Kühlung des Hohlrades (wie zuvor beschrieben) oder des Sonnenrades (wie zuletzt beschrieben) durchlaufen die gemessenen Temperaturschwankungen zweckmäßigerweise eine Frequenzweiche und es werden die niederfrequenteren Temperaturschwankungen durch Einwirkung auf die Antriebsleistung des Kälteerzeugers ausgeregelt und die höherfrequenten Temperaturschwankungen durch Einwirkung auf die Antriebsleistung der Umwälzpumpe zwischen Kälteerzeuger und Hohlrad beziehungsweise Sonnenwalze, weil die Umwälzpumpenleistung mit kleinerer Trägheit verstellbar ist als die Kompressorleistung im Kälteerzeuger.

### Zurück zum Verfahren:

Auf dem Wege zur Erfindung erkannte der Erfinder, dass eine Verbesserung des bis zu einem Punkte des Verfahrens erreichten Homogenitätsgrades umso schwerer fällt, desto höher der bis dahin bereits erreichte Homogenitätsgrad ist. Von "mangelhaft" auf "ausreichend" zu kommen fällt also leichter als der Schritt von "ausreichend" auf "befriedigend" und dieser wiederum leichter als der weitere zum Urteil "gut". Der Erfinder hatte ferner erkannt, dass es beim Mischen fast allein auf ein Gleichverteilen von Stoffen - zum Beispiel Mikroballons - nicht aber auf ein Gleichverteilen von unterschiedlich temperierten Individuen - seien es nun Moleküle, wie im Falle der Polymere und Harze, seien es Stück, wie im Falle der Mikroballons - des selben Stoffes ankommt. Hierauf aufbauend entwickelte er den Gedanken, die zu mischenden Stoffe deutlich unterschiedlichen Temperaturen auszusetzen. Der dadurch verstärkte Drang zum natürlichen Temperaturausgleich fördert auch das stoffliche Durchmischen. Dieser Vorteil kommt besonders gut beim Einmischen von Mikroballons zur Geltung, denn diese sind im Verhältnis zur Größe von Polymermolekülen riesig.

Derweil der erfindungsgemäße Temperierungsunterschied schon in den vom zu mischen Stoffstrom früh erreichten Querschnittebenen hilfreich ist, ist er im letzten zum Mischen vorgesehenen Schuss (= module) noch wichtiger. Darum ist vorzugsweise dort der eingestellte Temperaturunterschied zwischen heißen und kühlen Bauteilen am größten. Nachdem das übergeordnete Ziel der Erfindung die größere Schonung auch der Matrixpolymere - vor mechanischen wie thermischen Belastungen - ist, erscheint es empfehlenswerter, in der Extruderzone, in der das Endmischen erfolgt, das kalte Bauteil besonders weit abzukühlen und weniger, das heiße Bauteil besonders weit zu erhitzen.

In der für die Verarbeitung von zu schäumenden Acrylaten aller Art bevorzugten Orientierung des inhomogenen Temperaturfeldes - also mit einer gegenüber dem Hohlrade deutlich kühleren Zentralspindel - hat der Erfinder weiter gefolgert, dass das die Mischungsleistung steigernde Kühlen der Sonnenwalze (= Sonnenrad) - bei gleichzeitigem Beheizen des Hohlrades - im Längsschnitt des Mischungsaggregates betrachtet in der Endphase des Mischens besonders groß sein sollte. Deshalb wird bevorzugt, dass das Kühlmittel im Inneren der Sonnenwalze entgegen der Polymerförderrichtung strömt.

Eine andere Weiterbildung des erfindungsgemäßen Verfahrens ist dadurch gekennzeichnet, dass die expandierbaren Mikroballons vor ihrem Einleiten zunächst in Wasser suspendiert werden. Vorteilhafterweise wird in Kombination damit, dass erst diese Suspension - also nicht die trockenen Mikroballons - in die matrixbildende Polymermasse eingeleitet und dann eingemischt werden, die spätere Expansion der Mikroballons bei Temperaturen gestartet, die unterhalb der vom Mikroballon-Hersteller angegebenen Expansionsstart-Temperatur liegt. Diese Herstellerangabe - so die neue Erkenntnis - trifft nämlich nur auf die trockenen Mikroballons zu.

Die Maßnahme der vorherigen Suspendierung in Wasser vermindert also nicht nur die Staubbildung und Explosionsgefahr am Einfüllort der Mikroballons sondern wirkt auch als Weichmacher auf die Hülle der Mikroballons ein, besonders, wenn diese Polyacrylnitril-Kautschuk enthält. Zwar ist die Suspendierung von expandierbaren Mikroballons in Wasser bekannt - von Akzo Nobel kann man solche Pasten unter dem Markennamen Expancel© fertig kaufen - nicht aber die Rückwirkung dieser Suspendierung auf das Expansionsverhalten der Mikroballons und nicht die diese Erkenntnis nutzende Lehre, die Expansion unterhalb der Expansionsstart-Temperatur zu starten. Das niedrigere Temperaturniveau beim Expandieren im weitergebildeten Verfahren schont die Matrixpolymere noch weiter.

Der Erfinder erkannte, dass die Suspendierung in Wasser der Mischung in solcher Weise Wasser zuführt, dass - abgesehen von dem Wasser, das in und durch die Hülle der Mikroballons diffundiert - nahezu keine selbstständigen Wassertropfen in der Mischung entstehen sondern vielmehr die Mikroballonoberflächen mit Wasser benetzt sind. Zumindest gelingt dies mit Mikroballons einer Hülle, die im Wesentlichen aus Polyacrylnitril besteht. Der Erfinder erwartet, dass dieser Effekt auch mit anderen Mikroballontypen gelingt, solange nur die Polarität des Hüllenmateriales zu der des Wassers passt. Diese Benetzung der Mikroballonoberflächen bewirkt - so fand der Erfinder heraus - eine Schmierung und Haftungsminderung zwischen Mikroballon und Matrixmaterial, was das Einmischen weiter erleichtert und gleichzeitig die Scherbeanspruchung der Mikroballons beim Einmischen senkt.

Sowohl die selbst angefertigten Wasser-Mikroballon-Emulsionen wie auch die fertig zugekauften beinhalteten allerdings das Problem, dass es in Ruhe zur Entmischung kommt, weil die spezifischen Gewichte von Wasser und Mikroballons nicht übereinstimmen. Solche Entmischungen, so erkannte der Erfinder in mühevoller Arbeit, waren der Grund für solch niederfrequente Störungen in der Mikroballondosierung über der Extrudatlänge, dass diese durch kein Mischen mehr ausgeglichen werden konnten und sich im am Ende stehenden Erzeugnis als Dichtschwankung niederschlugen. Der naheliegende Lösungsvorschlag, den Emulsionsvorrat ständig zu rühren, erfolgte entweder mit zu geringer Rührleistung zur Abstellung dieses Fehlers oder mit zu großer Quote von gerade durch dieses Rühren zerstörter Mikroballons. Zumindest für die Massen, die ohnehin mit schwarzer Farbe hergestellt werden sollen, erdachte der Erfinder die simple aber wirkungsvolle Lehre, vom Zweistoff- auf ein Dreistoff-System zu gehen, und zwar als dritten Stoff Ruß dazu zu nehmen. Als besonders wirkungsvoll hat es sich erwiesen, erst Ruß in Wasser zu einer hinreichend dünnflüssigen schwarzen Paste zu emulgieren und dann erst die Mikroballons zuzusetzen, wonach eine dickflüssigere schwarze Paste vorliegt.

Um die größtmögliche Festigkeit im fertig extrudierten Erzeugnis zu erzielen, sollte der Wassergehalt der Mischung - also vorzugsweise der Selbstklebmasse - irgendwann nach dem Einleiten der wässerigen Ruß-Mikroballon-Suspension wieder abgesenkt werden; vorzugsweise - nämlich zwecks langem Erhalt und bestmöglicher Ausnutzung des Schmiereffektes durch das Wasser - erfolgt das erst nach weitgehender Erreichung einer homogenen Verteilung der Mikroballons in der matrixbildenden Masse. Eine den Wasserentzug forcierende Unterdruckanlegung erfolgt darum bevorzugt erst im Spätstadium der Massenverarbeitung. Man kann den Wasserentzug im letzten Schuss des Planetwalzenextruders anordnen, man kann ihn aber auch in einem separaten Aggregat dahinter anordnen, zum Beispiel einem Einschneckenextruder.

Während des wo auch immer angeordneten Wasserentzuges sollte zu seiner Forcierung ein Unterdruck angelegt werden. Zur weiteren Forcierung des Wasserentzuges ist weiterhin eine Temperatur nahe von 100°C oder knapp darüber zweckmäßig; von diesem bevorzugten Merkmal lässt sich insbesondere dann unbeschwert Gebrauch machen, wenn die Mikroballontype so ausgewählt ist, dass die Expansionsstarttemperatur oberhalb von 100°C liegt.

Der hier und in den sechs Absätzen zuvor offenbarte Gedanke, die Mikroballons durch ein Emulgieren in Wasser aufzuweichen und so ihre Expansionsstart-Temperatur abzusenken und weiter zumindest erhebliche Teile der Expansion dann bei einer Temperatur unterhalb der - bislang von den Herstellern nur für trockene Mikroballons angegebenen - Expansionsstart-Temperatur auszuführen, lässt sich auch selbstständig verwirklichen, also unabhängig von einer Inhomogenität des Temperaturfeldes im Querschnitt gemäß der Haupterfindung dieser Anmeldung. Das Gleiche gilt auch für die bevorzugte Weiterbildungen dieses Nebengedankens, nämlich zunächst Ruß in Wasser zu emulgieren und dann erst Mikroballons noch dazu zu emulgieren und, zumindest große Teile des mit der Emulsionszufuhr in die zu extrudierende Masse eingetragenen Wassers am Ende des Mischens oder nach dem Mischen wieder abzuziehen.

Wenn aber der Wasserabzug in Verbindung mit dem inhomogenen Temperaturfeld gemäß der Haupterfindung erfolgt, dann sollte zumindest eine der beiden Begrenzungsflächen des Mischraumes eine Temperatur von nahe bei oder oberhalb von 100°C aufweisen; in Verbindung mit der Ausführung in einem Planetwalzenextruder und in Verbindung mit Acrylaten und/oder Methacrylaten als Basispolymer der verarbeiteten Masse sollte also im Entwässerungsteil zumindest das Hohlrad eine Temperatur von nahezu oder über 100°C aufweisen. Der besondere Vorteil einer Entwässerung mit einer Hohlradtemperatur knapp unterhalb von 100°C - vorzugsweise etwa 95°C - liegt darin, dass in der zu entwässernden Masse dann erst durch die zusätzlich eingetragene Walkwärme die Siedetemperatur überschritten wird. Dieses Walken stellt aber auch sicher, dass keine großen Wasserdampfkavernen entstehen, die die Qualität des Enderzeugnisses verschlechtern könnten. Fällt dieses Walken nun aus - sei es durch eine Betriebsstörung oder durch eine Pause des die Anlage beaufsichtigenden Personals - schreitet die Verdampfung nicht unkontrolliert voran. Auch die Entstehung gefährlicher Dampfdrücke wird so automatisch unterbunden.

Gerade dann, wenn auch die heißere Begrenzungsfläche unterhalb von 100°C bleibt, ist es sinnvoll, wenn die andere Fläche - also die Zentralspindel im Falle der Entwässerung von Acrylaten und/oder Methacrylaten im letzten Schuss eines Planetwalzenextruders - nicht oder zumindest nicht allzu sehr kühlt. Im Entwässerungsschritt ist also gerade nicht mehr die hochgradig inhomogene Temperaturverteilung in der Querschnittebene bevorzugt, die noch in den mischenden Schüssen zuvor so vorteilhaft war. Zur weiterbildenden Lösung auch noch dieses Problemes ist es bevorzugt, die "Kühl"kanäle in diesem Entwässerungsbereich der Zentralspindel so groß zu bohren, dass ihre Innenseite mit einer wärmeisolierenden Manschette ausgekleidet werden kann. Mit dieser Maßnahme werden gleich zwei Vorteile erreicht, nämlich erstens dass die Zentralspindel kaum dort kühlt wo das vorzugsweise von hinten nach vorne strömende Kühlmittel noch nicht kühlen soll und zweitens dass die Zentralspindel in dem vor diesem Entwässerungs- und Entgasungsbereich liegenden Mischbereich, in dem die Innenwandung der Kühlkanäle blank gelassen wird, besonders gut kühlt, weil sich das Kühlmittel beim Passieren des Entwässerungs- und Entgasungsbereiches kaum aufgeheizt hat. Die wärmeisolierende Manschette besteht zweckmäßigerweise aus einem syntaktisch geschäumten Polymerschlauch. Ein hoher Luftblasengehalt darin sichert eine gute Wärmeisolation.

Analoges gilt bei Verwendung anderer Extrudertypen und Analoginverses gilt in einem Temperaturfeld umgekehrter Orientierung, wie es für die Verarbeitung polyolefinischer Massen bevorzugt wird; allerdings ist bei der für das Mischen polyolefinischer Massen mit expandierbaren Mikroballons darin bevorzugten Orientierung der Temperaturinhomogenität in den mischenden Schüssen - nämlich heiße Sonnenspindel und kühles Hohlrad - die weitgehende Aufgabe dieser Inhomogenität im entwässernden und entgasenden Schuss wegen der getrennten Ansteuerbarkeit der Kühlkanäle der verschiedenen Schüsse besonders einfach und genau erreichbar, indem man dort eben heißes und nicht kaltes Wasser in den entsprechenden Kanälen kreisen lässt.

Damit während dieses Wasserentzuges die Mikroballons nicht oder zumindest nicht zu stark weiter expandieren, kommen für diese Weiterbildung der Erfindung besonders die Mikroballontypen in Frage, deren Expansionsstart-Temperatur selbst im suspendierten Zustande noch oberhalb von 100°C liegt; gemäß der Erfahrung des Erfinders mit solchen Mikroballons, deren Hülle im Wesentlichen aus Polyacrylnitril besteht, sollte für die trockene Ware eine um 25°C höhere Expansionsstarttemperatur erwartet werden.

Vorzugsweise werden nach dem zuvor beschriebenen Verfahren und seinen bevorzugten Weiterbildungen Selbstklebebänder hergestellt. Dazu wird die die Mikroballons enthaltende Polymermasse
- in einer einzigen Schicht auf einen Träger eines zu bildenden einseitigen Selbstklebebandes aufgetragen oder
- in jeweils einer einzigen Schicht auf beide Seiten eines Trägers eines zu bildenden doppelseitigen Selbstklebebandes aufgetragen wird oder
- in einer einzigen Schicht auf einen Liner aufgetragen, wonach dieser Verbund entweder mit einem Verbund nach dem ersten Spiegelstrich zusammenkaschiert wird oder bereits ein doppelseitiges, trägerloses Selbstklebeband bildet.

### Zur für die Verfahrensdurchführung geeigneten Vorrichtung:

Zweckmäßigerweise wird zur Durchführung eines erfindungsgemäßen Verfahrens in einem Planetwalzenextruder und mit einem Temperaturgefälle vom heißen Hohlrade zum kühleren Sonnenrade ein solcher Planetwalzenextruder geschaffen, bei dem das Hohlrad eine Heizeinrichtung enthält. Gegenüber einem Planetwalzenextruder mit Wärmezufuhr allein durch die eingebrachte Walkarbeit wird ein viel kürzeres und besser reproduzierbares Anfahrverhalten der Anlage erreicht, wenn diese nicht rund um die Uhr betrieben werden kann. Auch kann die Höhe des erfindungsgemäßen Temperaturgefälles in weiteren Grenzen und mit höherer Präzision eingestellt werden.

Unbedingt erforderlich zur Erzielung der bevorzugten Orientierung des Temperaturgefälles - nämlich vom heißen Hohlrade hin zum kühleren Sonnenrade - ist, dass das Sonnenrad eine Kühleinrichtung enthält. Ohne eine Kühleinrichtung im Sonnenrade kann allenfalls ein Temperaturgefälle inverser Orientierung erzeugt werden.

Für eine Verfahrensdurchführung mit der bevorzugten Suspendierung von Mikroballons in Wasser vor deren Einleitung und mit einem späteren Wasserentzug wird zweckmäßigerweise eine Fertigungsanlage geschaffen, die hinter dem - ein- oder mehrschüssigen - Planetwalzenextruder und vor dem ersten oder einzigen formgebenden Aggregat (Extrusionsdüse und/oder Kalanderwalze) eine Unterdruckzone aufweist. In der Unterdruckzone gelingt der Wasserentzug gut, besonders gut als Wasserdampf.

### Zu den Erzeugnissen:

Zur Erfindung gehört auch ein Selbstklebeband, das eine geschäumte Selbstklebmasse enthält oder ausschließlich aus dieser Selbstklebemasse besteht, die gemäß dem erfindungsgemäßen Verfahren hergestellt wurde. Diese Selbstklebebänder zeichnen sich dadurch aus, dass die Molmassenverteilung in ihrer Selbstklebemasse besonders gut mit der Molmassenverteilung der am Verfahrensbeginn eingesetzten Polymere übereinstimmt. Der Mengenabfall bei den größten Molmassen und die Zunahme bei den kleinen Molmassen fällt also besonders gering aus. Es steht zu erwarten, dass die schonendere Polymerbehandlung während der Herstellung eines erfindungsgemäßen Selbstklebebandes zu dessen höherer Dauerbelastbarkeit, also erst später eintretendem Ermüdungsversagen führt.

Erfindungsgemäße Selbstklebebänder zeichnen sich weiterhin durch eine besonders glatte Oberfläche aus; je nach betriebener Sorgfalt und Reinheit der Umgebungsluft - und damit auch der Extrusionsdüse - erreichen schon allein durch Extrusion erzeugte Selbstklebebänder mittlere Rautiefen zwischen 12 und 2 µm. Diese Selbstklebebänder wirken dadurch haftfreudiger als man dies allein von den rheologischen Daten der Masse her erwarten würde. Dies lässt sich dahingehend nutzen, dass ein höherer Vernetzungsgrad eingestellt wird - dessen tack-mindernde Nebenwirkung kann ja in höherem Maße geduldet werden - , um so noch höhere Scherstandzeiten zu erreichen.

Wegen der besonders hohen Ermüdungsbeständigkeit erfindungsgemäß verarbeiteter Selbstklebemassen reicht es für die Herstellung der meisten Selbstklebebänder aus, wenn deren Selbstklebeschicht oder -schichten einschichtig aus einer erfindungsgemäß verarbeiteten Selbstklebemasse hergestellt werden.

Die Erfindung wird nachfolgend anhand eines bevorzugten Beispieles näher erläutert:
Zunächst wurde das Basispolymer in radikalischer Polymerisation in einem konventionellen Reaktor hergestellt; dazu wurde er befüllt mit
54,4 kg 2-Ethylhexylacrylat,
20,0 kg Methylacrylat,
5,6 kg Acrylsäure und
53,3 kg Lösungsmittelgemisch Aceton/Isopropanol (94:6).

Nach 45-minütigem Rühren - unter mit Stickstoffgas hoch angereicherter Atmosphäre zur Unterdrückung einer Brand- und Explosionsgefahr - wurde der Reaktor auf 58°C hochgeheizt und es wurden 40 g Vazo®67 des Herstellers DuPont - das ist 2,2'-Azobis(2-methylbutyronitril) - hinzugegeben. Anschließend wurde das äußere Heizbad auf 75°C erwärmt und die Reaktion konstant bei dieser Außentemperatur durchgeführt. Nach einer Stunde wurden weitere 40 g Vazo 67 zugegeben und nach vier weiteren Stunden wurde die Lösung mit weiteren 10 kg Lösungsmittel -wieder Aceton/Isopropanol-Gemisch (94:6)-verdünnt zur Erleichterung der Restmonomermigration und dadurch zur Steigerung des Polymerisationsgrades und somit zur Senkung des Restmonomergehaltes. Nach fünf sowie nach sieben weiteren Stunden wurden jeweils 120 g Perkadox© 16 des Herstellers Akzo Nobel - das ist Bis-(4-tert-butylcyclohexyl)-peroxydicarbonat - nachgelegt zum Inganghalten der Polymerisationsreaktion. Nach fünf weiteren Stunden - also nach insgesamt 22 h Reaktionszeit - wurde die Polymerisation abgebrochen. Im Reaktor war bis dahin ein Feststoffgehalt von 55,9% erreicht.

Das so erhaltene Polyacrylat wurde im Labor zur internen Qualitätskontrolle vermessen. Dazu wurde von einer kleinen Probemenge in einem Vakuum-Trockenschrank der Restlösungsmittelgehalt auf unter 1%o gesenkt, wonach das Polymer in 99 Gew.-% Toluol (= Methylbenzen nach IUPAC-Nomenklatur) gelöst wurde. Der K-Wert wurde sodann gemäß der FIKENTSCHER Messmethode - also mit einem auf 25°C temperierten VOGEL-OSSAG-Viskosimeter - gemessen. Der so gemessene K-Wert betrug 58,8 und dient als Maß für die durchschnittliche Molekülgröße hochpolymerer Stoffe (siehe auch Zeitschrift Polymer, Jahrgang 1967, Ausgabe 8, Seiten 381 ff.). Gemessen wurde ferner ein mittleres Molekulargewicht von M_{w} = 746.000 g/mol, eine Polydispersität D (M_{w}/Mₙ) von 8,9 und eine statische Glasübergangstemperatur T_{g} von -35,6°C.

Dieses als Basis dienende Acrylatcopolymer wurde anschließend in einem Einschnecken-extruder bis auf einen Restlösemittelgehalt unter 0,3 Gewichtsprozent aufkonzentriert.

Neben der oben beschriebenen Herstellung des Basispolymeren wurden die Mikroballons präpariert; dazu wurden Mikroballons der Type Expancel 051 DU 40 des Herstellers Akzo Nobel - unexpaniderter Durchmesser zwischen 10 und 16 µm - in eine wässerige Rußpaste der Type Levanyl Schwarz N-LF des Herstellers LANXESS Deutschland GmbH gegeben. Die zugekaufte Rußpaste Levanyl enthält nach hiesigem Kenntnisstand 40% Ruß und 60% Wasser. Der Ruß im Wasser stabilisiert von Anfang an die DreiStoff-Emulsion, die erzeugt wird durch Zugabe der Mikroballons zu der Rußpaste. Mit "stabilisieren" ist hier ein physikalisches Stabilisieren gemeint, also die Verhinderung einer Entmischung zwischen den drei Komponenten durch ihre unterschiedliche Dichte. Wegen des ohnehin hohen Wassergehaltes in der zugekauften Rußpaste braucht dieser kein zusätzliches Wasser zugeführt zu werden vor dem Einmischen der Mikroballons. Und zwar wurden zu 100 Gewichtsteilen Levanyl-Rußpaste 69,5 Gewichtsteile Mikroballons der Type Expancel 051 DU 40 zugegeben. Die so gefertigte Paste enthielt also 23,6% Ruß, 35,4% Wasser und 41% Mikroballons.

Um in den Genuss der bevorzugten Absenkung der zum Expansionsstart benötigten Temperatur zu kommen, wird die Erfindung weiterbildend diese die Mikroballons enthaltende Paste erst bei Raumtemperatur gelagert. Zwar ist der gewünschte Effekt schon nach wenigen Minuten Lagerzeit nachweisbar, aber um diesen gewünschten Effekt zur größtmöglichen Blüte und vor allem zur Konstanz über der Lagerzeit und damit zur auch quantitativ besonders leichten und zuverlässigen Reproduzierbarkeit zu bringen, empfiehlt sich eine Lagerungszeit von mindestens 12 Stunden. Nach dieser Zeit hat sich der Effekt der Expansionsstarttemperaturabsenkung so weit asymptotisch seinem Maximum für t → ∞ angenähert, dass eine weitere Lagerungszeit diesen Effekt kaum noch vergrößert.

Erst nachdem sich der weichmachende Effekt des Wassers auf die im Wesentlichen Nitrilkautschuk enthaltenden Hüllen der Mikroballons eingestellt hatte, wurde diese Paste aus Ruß, Wasser und Mikroballons dem Basispolymer zugemischt und zwar in 2,44 Gewichtsteilen zu 100 Gewichtsteilen Polymer. Diese Paste wurde am Einfüllschacht des Planetwalzenextruders zudosiert.

Weiterhin wurden an diesem Einfüllschacht in den Planetwalzenextruder gewichtsanteilig bezogen auf 100 phr Basispolymer:

| Zusatzstoffe | Anteil der Zutaten [w-phr%] |
|---|---|
| Acrylatpolymer | 100 |
| Dertophene T110 | 40 |
| wässerige Ruß-Mikroballonpaste | 2,44 |
| Epikure© 925 | 0,2 |
| Polypox R16 | 0,19 |
| Summe | 142,83 |

Polypox R16 wird von Dow Chemical angeboten, dient als Vernetzer und ist nach IUPAC Penthärythritol-Polyglycidylether.

Epikure 925 wird von Hexion Specialty angeboten, dient ebenfalls als Vernetzer und ist nach IUPAC Triethylentetramin.

Bezogen auf eine Gesamtsumme von 100 w% und die Paste aufgeteilt dargestellt in ihren Komponenten ergibt das:

| Zusatzstoffe | Anteil der Zutaten [w-%] | |
|---|---|---|
| Acrylatpolymer | 70,013 | |
| Dertophene T110 | 28,005 | |
| wässerige Ruß-Mikroballonpaste | 1,709 | |
| davon Wasser | | 0,605 |
| Expancel 051 DU 40 | | 0,701 |
| Ruß | | 0,403 |
| Epikure 925 | 0,140 | |
| Polypox R16 | 0,133 | |

Für die Durchführung dieses Beispieles des erfindungsgemäßen Verfahrens wird ein vierschüssiger Planetwalzenextruder 1 der Firma Entex eingesetzt. Noch vor dem ersten Schuss befindet sich ein Einzugsbereich, in dem ein Einfülltrichter direkt auf die Zentralspindel 5 füttert, in dem also noch keine Planetwalzen 6 um die Zentralspindel 5 kreisen.

In diesen Einfüllschacht wird sowohl das oben beschriebene Acrylatpolymer als auch das Harz Dertophene T110 über gravimetrisch dosiert zugefüttert. Zur weiteren Effizienzsteigerung des Mischens hat es sich als vorteilhaft erwiesen, das Harz auf 150°C vorzuheizen. Vorteilhafterweise wird das Harz als Strang aus einem vorgeschalteten Einschneckenextruder zugefüttert.

Das Acrylatpolymer kann als Granulat zugesetzt werden. Nicht aus technischem aber aus wirtschaftlichem Grunde - das Polymer ist im Betrieb des Erfinders selbst hergestellt worden - ist aber auch dieses Polymer in diesem Beispiel strangförmig zugefüttert worden aus einem anderen Extruder; so konnte der Granulierschritt eingespart werden. In rationellste Verfahrensführung ist dieser andere Extruder mit dem Aufkonzentrationsextruder am Ende des Polymerherstellungsverfahrens identisch und man kommt zu einer kontinuierlichen Fertigung. Als besonders vorteilhaft hat sich herausgestellt, den Strang aus Acrylatcolpolymer mit 140°C zuzufüttern.

Von diesem Einzugsbereich aus - in dem die Zentralspindel 5 von einem Kühlkanal 5.1 durchzogen ist, in dem Kühlmittel sich von etwa 41°C auf 44°C aufheizt, und in dem Gehäuse und Einfüllschacht von Kanälen durchzogen sind, in die auf 50°C gekühltes Wasser eingeleitet wird - gelangt die Masse dann in den ersten Schuss des Planetwalzenextruders 1 durch den axialen Vorschub der Schrägverzahnung der durchgehenden Zentralspindel 5. Nicht nur zum Abführen der hier durch Walken zugeführten Wärme, sondern darüber hinaus zum Senken der Massentemperatur wird in diesem ersten Schuss sowohl das Hohlrad als auch die Zentralspindel gekühlt.

Jeder der vier Schüsse der verwendeten Anlage war etwa 1,1 m lang. Der Teilkreisdurchmesser der Innenverzahnung der Hohlräder betrug etwa 550 mm und der TeilkreisDurchmesser der Planetenwalzen etwa 50 mm. Die Zentralspindel drehte mit 30 U/min.

Die **Figur** zeigt schematisch **oben links** den Planetwalzenextruder 1 im Querschnitt durch den ersten Schuss (= Modul 1) und die dort eingestellten Temperaturen des Temperierungsfluides Wasser.

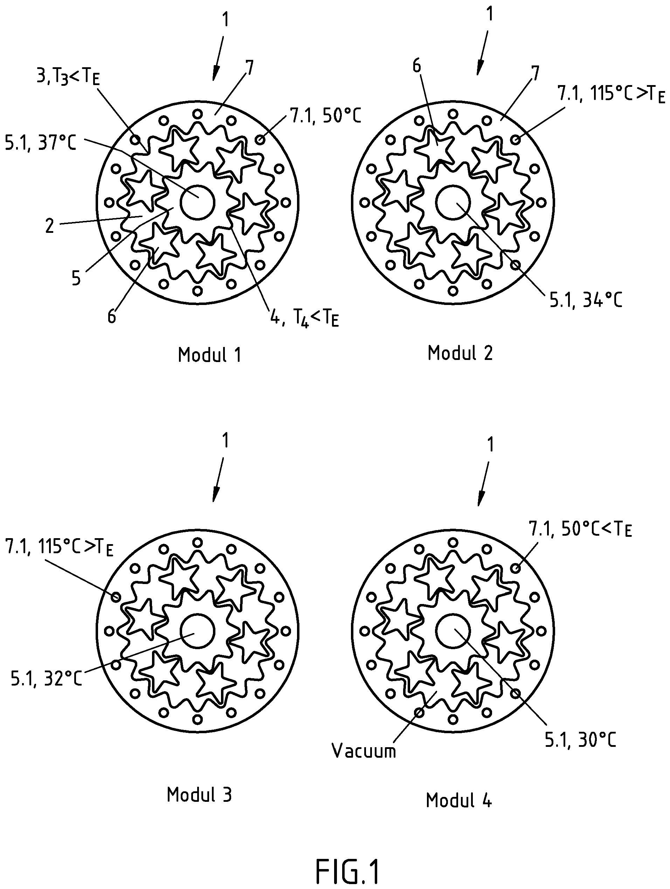

Entgegen der Polymerförderrichtung wird auf 50°C herunter gekühltes Wasser in die Kühlkanäle 7.1 des innenverzahnten Hohlrades 7 (= Hohlwalze = Walzenzylinder) gepumpt und am Beginn des ersten Schusses mit etwa 55°C wieder abgezogen und in ein erstes Kühlaggregat geleitet, wo es wieder auf 50°C heruntergekühlt wird, um es erneut am Ende dieses ersten Schusses wieder in das Hohlrad 7 einzuleiten. Die Figur zeigt jeweils die Einleitungstemperaturen der Temperiermedien.

Die Zentralspindel 5 wird über einen Kühlkanale 5.1 gekühlt. Anders als die Temperierkanäle 7.1 des Hohlrades 7, die von Modul zu Modul separiert sind, durchzieht der Kühlkanal 5.1 die Zentralspindel 5 genauso ununterbrochen, wie die Zentralspindel 5 selbst ununterbrochen ist. Unmittelbar steuern lässt sich daher nur die Kühlmitteltemperatur an der Einleitungsstelle am Ende des letzten - hier: vierten - Schusses. An dieser rückwärtigen Stelle wurde das Spindelkühlwasser mit 30°C eingeleitet. Es gelangt in das Ende des ersten Schusses - so haben inzwischen Messungen und eine Modellrechnung ergeben - mit 37°C und verlässt diesen mit 41°C, um von dort in den bereits beschriebenen Einzugsbereich weiter zu strömen, sich dort weiter bis auf etwa 44°C aufheizen zu lassen und von dort schließlich zu einem zweiten Kühlaggregat zu strömen, wo es wieder auf 30°C herunter gekühlt wird, bevor es erneut am Ende des vierten Schusses über eine schleifende Dichtung wieder in den Kühlkanal 5.1 geleitet wird.

Die Übergabestellen von einem zum nächsten Schuss sind nicht von Planetwalzen durchdrungen. Darum kann an diesen Übergabestellen besonders leicht Weiteres hinzu dosiert werden. An der Übergabestelle vom ersten zum zweiten Schuss, wird die Drei-Komponenten-Paste aus Wasser, Ruß und Mikroballons gravimetrisch zudosiert.

Die **Figur** zeigt schematisch **oben rechts** den Planetwalzenextruder 1 im Querschnitt durch den zweiten Schuss (= Modul 2) und die dort eingestellten Temperaturen des Temperierungsfluides Wasser. In die Gehäusekanäle 7.1 dieses Schusses wird 115°C heißes Wasser (also unter Überdruck stehend) eingeleitet. Hier hat dieses Wasser eine heizende und keine kühlende Wirkung wie das Gehäusetemperierwasser im Einzugsbereich und im ersten Schuss. Das Kühlwasser der Zentralspindel passiert mit etwa 34°C die Grenze zwischen drittem und zweitem Schuss und verlässt den zweiten Schuss in Richtung erstem Schuss mit etwa 37°C.

Aufgrund der guten Wärmeleitfähigkeit der verwendeten Metalle für das Gehäuse und für die Spindel liegt die jeweilige Oberflächentemperatur dicht bei der Temperatur des jeweils temperierenden Wassers. Auf der Innenseite des Hohlrades 7 zeigen Wärmeübergangs-Berechnungen eine mittlere Oberflächentemperatur in diesem zweiten Schuss von etwa 112°C an. Auf der Außenseite der Zentralspindel 5 zeigen Wärmeübergangs-Berechnungen eine mittlere Oberflächentemperatur in diesem Schuss von 38°C an. Die Temperaturdifferenz zwischen beiden Oberflächen beträgt also etwa 74°C. Sie führt zu einem erfindungsgemäß erheblich inhomogenen Temperaturfeld in der Querschnittsebene durch diesen zweiten Schuss des Planetwalzenextruders.

Die Planetwalzen 6 nehmen - der Übersichtlichkeit halber nicht in der Figur dargestellt - eine zwischen diesen Extremen liegende Temperatur an. Gemäß einer Modellrechnung zum Wärmeübergang weisen die Planetenräder auf ihrer dem Hohlrad 7 zugewandten Seite eine Temperatur von etwa 80°C auf und auf ihrer dem Sonnenrad zugewandten Seite von etwa 79°C.

Durch diese Temperaturverhältnisse entsteht eine dünnschichtweise Expansion der Masse in entfernter Analogie zur Kohlenstoffverteilung in einer Damaszener Stahlklinge. Die Mikroballon-Expansion wird dabei im Hohlrad 7 und zwischen Planetenrad 6 und Hohlrad 7 - dort allerdings nur in der hinreichend nah an der Hohlradoberfläche befindlichen Schicht - ausgeführt. Dass erstaunlicherweise trotzdem am Ende die gesamte Masse sehr schön homogen expandiert ist, erklärt sich der Erfinder mit der außerordentlich guten Durchmischungsleistung gerade aufgrund des großen Temperaturunterschiedes, die auch zu einem Durchmischen bereits expandierter Teilmengen mit noch nicht expandierten Teilmengen führt. Der früher kontinuierliche Expansionsprozess ist hier also zeitlich und räumlich aufgegliedert in eine Vielzahl von Expansionsportionen.

An der Übergabestelle zwischen zweitem und drittem Schuss wurde nichts Weiteres zudosiert. Der entsprechende Deckel blieb geschlossen.

Die **Figur** zeigt schematisch **unten links** den Planetwalzenextruder 1 im Querschnitt durch den dritten Schuss (= Modul 3) und die dort eingestellten Temperaturen des Temperierungsfluides Wasser. In die Gehäusekanäle 7.1 dieses Schusses wird ebenfalls 115°C heißes Wasser eingeleitet. Hier hat dieses Wasser eine geringere heizende Wirkung als im zweiten Schuss. Das Kühlwasser der Zentralspindel passiert mit etwa 32°C die Grenze zwischen viertem und drittem Schuss und verlässt den dritten Schuss in Richtung zweitem Schuss mit etwa 34°C.

Aufgrund der guten Wärmeleitfähigkeit der verwendeten Metalle für das Gehäuse und für die Spindel liegt die jeweilige Oberflächentemperatur dicht bei der Temperatur des jeweils temperierenden Wassers. Auf der Innenseite des Hohlrades 7 zeigen Wärmeübergangs-Berechnungen eine mittlere Oberflächentemperatur in diesem zweiten Schuss von etwa 113°C an. Auf der Außenseite der Zentralspindel 5 zeigen Wärmeübergangs-Berechnungen eine mittlere Oberflächentemperatur in diesem Schuss von 35°C an. Die Temperaturdifferenz zwischen beiden Oberflächen beträgt also etwa 78°C. Sie führt zu einem noch etwas inhomogeneren Temperaturfeld in der Querschnittsebene durch diesen dritten als im zweiten Schuss des Planetwalzenextruders.

Auch in diesem dritten Schuss nehmen die Planetwalzen eine zwischen den vorgenannten Extremen liegende Temperatur an. Gemäß einer Modellrechnung zum Wärmeübergang weisen die Planetenräder auf ihrer dem Hohlrad zugewandten Seite eine Temperatur von etwa 79°C auf und auf ihrer dem Sonnenrad zugewandten Seite von etwa 78°C.

Durch diese gegenüber dem zweiten Schuss nur geringfügig noch weiter zugespitzten Temperaturverhältnisse entsteht auch hier eine dünnschichtweise Expansion der Masse. Die Mikroballon-Expansion wird dabei im Hohlrad 7 und zwischen Planetenrad 6 und Hohlrad 7 - dort allerdings nur in der hinreichend nah an der Hohlradoberfläche befindlichen Schicht - ausgeführt.

An der Übergabestelle vom dritten zum vierten Schuss (= Modul 4) wurden die leicht einmischbaren aber temperaturempfindlichen Vernetzungsmittel Polypox R16 und Epikure 925 gravimetrisch zudosiert.

Die **Figur** zeigt schematisch **unten rechts** den Planetwalzenextruder 1 im Querschnitt durch den vierten Schuss (= Modul 4) und die dort eingestellten Temperaturen des Temperierungsfluides Wasser. In die Gehäusekanäle 7.1 dieses Schusses wird 50°C heißes Wasser eingeleitet und bewirkt eine Kühlung. Das Kühlwasser der Zentralspindel tritt an derem Ende mit etwa 30°C ein und passiert mit etwa 32°C die Grenze zwischen viertem und drittem Schuss.

Die erhebliche Absenkung der Prozesstemperaturen in diesem Schuss ermöglicht eine Vakuumanlegung zum Austreiben von Luft und Wasserdampf ohne wesentlichen weiteren Fortschritt der Expansion der Mikroballons. Auch wird in diesem Schritt eine gute Verteilung der beiden Vernetzungsmittel erreicht.

Danach wurde die Masse in einen konventionell temperierten Einschnecken-Extruder übergeben, der die Wiederaufheizung der Masse auf die Extrusionstemperatur bei gleichzeitigem Druckaufbau betrieb. Zwar musste für eine hinreichend leichte Durchfließbarkeit der Extrusionsdüse dort eine Temperatur eingestellt werden, die knapp oberhalb der Expansionsstarttemperatur der Mikroballons lag, aber das Zusammenwirken von hohem Druck in diesem Einschneckenextruder und - durch bereits zuvor erreichte Expansion - verringertem Gasdruck in den Mikroballons führte zu einem nur sehr geringen Anstieg der Expansion. Das extrudierte Profil zeigte eine ungewöhnlich glatte Oberfläche mit einer mittleren Rautiefe unter 12 µm.

Ein in einem Vergleichsversuch durchgeführter Verzicht auf das hochgradig inhomogene Temperaturfeld im zweiten und dritten Schuss des Planetwalzenextruders führte zu schlechterer Homogenität und größerer mittlerer Rautiefe, weshalb diese hohe Inhomogenität als kausal für den erzielten Erfolg angesehen wird. Lagen in einem Schuss sowohl die Spindeltemperatur als auch die Hohlradtemperatur oberhalb der - ggf. durch Wassereinwirkung abgesenkten - Expansionsstarttemperatur der Mikroballons, so gelang keine gute Homogenität des Schaumes. Lagen hingegen beide Temperaturen unterhalb der Expansionsstarttemperatur, so gelang gar keine Schäumung.

### Bezugszeichenliste:

- 1: Mischaggregat, Planetwalzenextruder
- 2: Mischraum im Mischaggregat 1
- 3: erste Oberfläche, die eine Temperatur T₃ aufweist und den Mischraum 2 begrenzt
- 4: zweite Oberfläche, die eine Temperatur T₄ aufweist und den Mischraum 2 begrenzt
- 5: Zentralspindel eines Planetwalzenextruders = Sonnenrad = Sonnenwalze
- 5.1: Kühlkanal in 5
- 6: Planetwalzen eines Planetwalzenextruders
- 7: innenverzahntes Hohlrad eines Planetwalzenextruders = Hohlwalze
- 7.1: Kühlkanäle in 7
- T_{E}: Expansionstemperatur

## Patentansprüche

1. Verfahren zum Herstellen einer syntaktisch geschäumten Polymermasse, vorzugsweise einer druckempfindlichen Klebemasse, wobei
a) zumindest die Mehrheit der abgeschlossenen Schaumhohlräume durch das Einleiten expandierbarer Mikroballons in ein Matrixmaterial und nachfolgendes Mischen in einem mischenden Aggregat (1) erreicht wird und
b) die Expansion der expandierbaren Mikroballons nach deren Einleiten in das Matrixmaterial erfolgt.
**dadurch gekennzeichnet,**
c) **dass** die Temperaturverteilung im mischenden Aggregat (1) inhomogen ist in einer Schnittebene quer zur Förderrichtung dieses Aggregates (1),
d) **dass** in einem Schnitt quer zur Förderrichtung des mischenden Aggregates (1) eine erste den Mischraum (2) begrenzende Oberfläche (3) des mischenden Aggregates (1) so hoch temperiert ist, dass in der Mikroballons enthaltenden Polymermasse, insoweit sie in Kontakt mit dieser ersten begrenzenden Oberfläche (3) gerät, die Temperatur (T_{E}), die zum Start und Fortschritt der Expansion ausreicht, erreicht wird,
e) während im selben Schnitt quer zur Förderrichtung des mischenden Aggregates (1) eine zweite den Mischraum (2) begrenzende Oberfläche (4) des mischenden Aggregates (1) so niedrig temperiert ist, dass in der Mikroballons enthaltenden Polymermasse, insoweit sie in Kontakt mit dieser zweiten begrenzenden Oberfläche (4) gerät, die Temperatur (T_{E}), die zum Start und Fortschritt der Expansion ausreicht, nicht erreicht wird.

2. Verfahren nach Anspruch 1, **dadurch gekennzeichnet, dass**
f) dieses mischende Aggregat (1) ein Planetwalzenextruder ist
- und dessen Bauteile, eine außenverzahnte Zentralspindel (5) und ein innenverzahntes Hohlrad (7), in zumindest einer Querschnittebene verschieden temperiert sind, und zwar so verschieden,
- dass in der Mikroballons enthaltenden Polymermasse, insoweit sie in Kontakt mit dem ersten dieser beiden Bauteile (5 oder 7) gerät, die Temperatur (T_{E}), die zum Start und Fortschritt der Expansion ausreicht, erreicht wird,
- während in der Mikroballons enthaltenden Polymermasse, insoweit sie in Kontakt mit dem zweiten dieser beiden Bauteile (7 beziehungsweise 5) gerät, die Temperatur (T_{E}), die zum Start und Fortschritt der Expansion ausreicht, nicht erreicht wird.

3. Verfahren nach Anspruch 2, **dadurch gekennzeichnet, dass**
- das innenverzahnte Hohlrad (7) des Planetwalzenextruders (1) so hoch temperiert ist, dass in der Mikroballons enthaltenden Polymermasse, insoweit sie in Kontakt mit diesem Hohlrad (7) gerät, die Temperatur (T_{E}), die zum Start und Fortschritt der Expansion ausreicht, erreicht wird,
- während die außenverzahnte Zentralspindel (5) so niedrig temperiert ist, dass in der Mikroballons enthaltenden Polymermasse, insoweit sie in Kontakt mit dieser Zentralspindel (5) gerät, die Temperatur (T_{E}), die zum Start oder Fortschritt der Expansion ausreicht, nicht erreicht wird.

4. Verfahren nach Anspruch 2, **dadurch gekennzeichnet, dass**
- das innenverzahnte Hohlrad (7) des Planetwalzenextruders (1) so niedrig temperiert ist, dass in der Mikroballons enthaltenden Polymermasse, insoweit sie in Kontakt mit diesem Hohlrad (7) gerät, die Temperatur (T_{E}), die zum Start und Fortschritt der Expansion ausreicht, erreicht wird,
- während die außenverzahnte Zentralspindel (5) so hoch temperiert ist, dass in der Mikroballons enthaltenden Polymermasse, insoweit sie in Kontakt mit dieser Zentralspindel (5) gerät, die Temperatur (T_{E}), die zum Start oder Fortschritt der Expansion ausreicht, nicht erreicht wird.

5. Verfahren nach Anspruch 1, **dadurch gekennzeichnet, dass** die Temperaturdifferenz zwischen der ersten, den Mischraum (2) begrenzenden Oberfläche (3) des mischenden Aggregates und der zweiten, den Mischraum (2) begrenzenden Oberfläche (4) des mischenden Aggregates mindestens 50°C beträgt, vorzugsweise zwischen 65°C und 90°C.

6. Verfahren nach den Ansprüchen 3 und 5, **dadurch gekennzeichnet, dass** die Temperaturdifferenz zwischen dem heißeren Hohlrad (7) und der kühleren Zentralspindel (5) mindestens 50°C beträgt, vorzugsweise zwischen 65°C und 90°C.

7. Verfahren nach Anspruch 6, **dadurch gekennzeichnet, dass** das Matrixmaterial Polymere enthält und als Matrixbasispolymer, gegebenenfalls neben einem klebrigkeitssteigernden Harz, Acrylate und/oder Methacrylate verwendet werden.

8. Verfahren nach den Ansprüchen 4 und 5, **dadurch gekennzeichnet, dass** die Temperaturdifferenz zwischen dem kühleren Hohlrad (7) und der heißeren Zentralspindel (5) mindestens 50°C beträgt, vorzugsweise zwischen 65°C und 90°C.

9. Verfahren nach Anspruch 8, **dadurch gekennzeichnet, dass** das Matrixmaterial Polymere enthält und als Matrixbasispolymer, gegebenenfalls neben einem klebrigkeitssteigernden Harz, Polyethylen und/oder Polypropylen und/oder Polyethylenvinylacetat und/oder Polypropylenvinylacetat und/oder Mischpolymerisate aus einigen oder allen der genannten Monomeren verwendet werden.

10. Verfahren nach Anspruch 7, **dadurch gekennzeichnet, dass** das Matrixbasispolymer im Einzugsbereich des Planetwalzenextruders (1) auf die kühle Zentralspindel (5) dosiert wird.

11. Verfahren nach Anspruch 9, **dadurch gekennzeichnet, dass** das Matrixbasispolymer im Einzugsbereich des Planetwalzenextruders (1) auf die heiße Zentralspindel (5) dosiert wird.

12. Verfahren nach Anspruch 1, **dadurch gekennzeichnet, dass** die expandierbaren Mikroballons vor ihrem Einleiten in die Polymermasse zunächst in Wasser suspendiert werden und in dieser wässerigen Umgebung mindestens 12 h verbleiben, bevor diese Wasser-Mikroballon-Suspension in die matrixbildende Polymermasse eingeleitet und gemischt wird.

13. Verfahren nach Anspruch 12, bei dem Ruß in die Polymermasse eingemischt wird, **dadurch gekennzeichnet, dass** zuerst der Ruß in Wasser emulgiert oder suspendiert wird und danach in diese Ruß-Wasser-Emulsion beziehungsweise -suspension die Mikroballons suspendiert werden, bevor diese Ruß-Wasser-Mikroballon-Suspension in die matrixbildende Polymermasse eingeleitet und gemischt wird.

14. Verfahren nach Anspruch 12 oder 13, **dadurch gekennzeichnet, dass** die Expansion der Mikroballons bei einer Temperatur gestartet wird, die unterhalb der vom Mikroballon-Hersteller angegebenen Expansionsstart-Temperatur der verwendeten Mikroballons liegt.

15. Verfahren nach Anspruch 14, **dadurch gekennzeichnet, dass** die Expansion der Mikroballons um mindestens 8°C, vorzugsweise um 10°C bis 25°C unterhalb ihrer Expansionsstart-Temperatur gestartet wird.

## Claims

1. Process for producing a syntactically foamed polymer composition, preferably a pressure-sensitive adhesive composition, where
a) at least the majority of the closed foam voids are achieved by introduction of expandable microspheres into a matrix material and subsequent mixing in a mixing machine (1) and
b) the expansion of the expandable microspheres is carried out after they have been introduced into the matrix material,
**characterized**
c) **in that** the temperature distribution in the mixing machine (1) is inhomogeneous in a plane perpendicular to the transport direction of this machine (1),
d) **in that** a first surface (3) bounding the mixing space (2) of the mixing machine (1) should, in a plane perpendicular to the transport direction of the mixing machine (1), be maintained at a temperature which is sufficiently high for polymer composition present in the microspheres, insofar as it comes into contact with this first bounding surface (3), to reach the temperature (T_{E}) which is sufficient for commencement and continuation of expansion,
e) while in the same plane perpendicular to the transport direction of the mixing machine (1), a second surface (4) bounding the mixing space (2) of the mixing machine (1) is maintained at a temperature which is sufficiently low for polymer composition present in the microspheres, insofar as it comes into contact with this second bounding surface (4), not to reach the temperature (T_{E}) which is sufficient for commencement and continuation of expansion.

2. Process according to Claim 1, **characterized in that**
f) this mixing machine (1) is a planetary-gear extruder
- and the components thereof, an externally toothed central spindle (5) and an internally toothed hollow gear (7) are maintained at different temperatures in at least one cross-sectional plane in such a way
- that the temperature (T_{E}) which is sufficient for commencement and continuation of expansion is reached in polymer composition present in the microspheres insofar as it comes into contact with the first of these two components (5 or 7),
- while the temperature (T_{E}) which is sufficient for commencement and continuation of expansion is not reached in polymer composition present in the microspheres, insofar as it comes into contact with the second of these two components (7 or 5).

3. Process according to Claim 2, **characterized in that**
- the internally toothed hollow gear (7) of the planetary-gear extruder (1) is maintained at a temperature which is sufficiently high for the temperature (T_{E}) which is sufficient for commencement and continuation of expansion to be reached in polymer composition present in the microspheres, insofar as it comes into contact with this hollow gear (7),
- while the externally toothed central spindle (5) is maintained at a temperature which is sufficiently low for the temperature (T_{E}) which is sufficient for commencement or continuation of expansion not to be reached in polymer composition present in the microspheres, insofar as it comes into contact with this central spindle (5).

4. Process according to Claim 2, **characterized in that**
- the internally toothed hollow gear (7) of the planetary-gear extruder (1) is maintained at a temperature which is sufficiently low for the temperature (T_{E}) which is sufficient for commencement or continuation of expansion to be reached in polymer composition present in the microspheres, insofar as it comes into contact with this hollow gear (7),
- while the externally toothed central spindle (5) is maintained at a temperature which is sufficiently high for the temperature (T_{E}) which is sufficient for commencement and continuation of expansion not to be reached in polymer composition present in the microspheres, insofar as it comes into contact with this central spindle (5).

5. Process according to Claim 1, **characterized in that** the temperature difference between the first surface (3) bounding the mixing space (2) of the mixing machine and the second surface (4) bounding the mixing space (2) of the mixing machine is at least 50°C, preferably in the range from 65°C to 90°C.

6. Process according to either of Claims 3 and 5, **characterized in that** the temperature difference between the hotter hollow gear (7) and the cooler central spindle (5) is at least 50°C, preferably in the range from 65°C to 90°C.

7. Process according to Claim 6, **characterized in that** the matrix material contains polymers and acrylates and/or methacrylates are used as matrix base polymer, optionally together with a tack-increasing resin.

8. Process according to either of Claims 4 and 5, **characterized in that** the temperature difference between the cooler hollow gear (7) and the hotter central spindle (5) is at least 50°C, preferably in the range from 65°C to 90°C.

9. Process according to Claim 8, **characterized in that** the matrix material contains polymers and polyethylene and/or polypropylene and/or polyethylenevinyl acetate and/or polypropylene-vinyl acetate and/or copolymers of some or all of the monomers mentioned are used as matrix base polymer, optionally together with a tack-increasing resin.

10. Process according to Claim 7, **characterized in that** the matrix base polymer is introduced onto the cool central spindle (5) in the intake region of the planetary-gear extruder (1).

11. Process according to Claim 9, **characterized in that** the matrix base polymer is introduced onto the hot central spindle (5) in the intake region of the planetary-gear extruder (1).

12. Process according to Claim 1, **characterized in that** the expandable microspheres are firstly suspended in water before being introduced into the polymer composition and remain in this aqueous environment for at least 12 h before this water-microsphere suspension is introduced into and mixed with the matrix-forming polymer composition.

13. Process according to Claim 12 in which carbon black is mixed into the polymer composition, **characterized in that** the carbon black is firstly emulsified or suspended in water and the microspheres are then suspended in this carbon black-water emulsion or suspension before this carbon black-water-microsphere suspension is introduced into and mixed with the matrix-forming polymer composition.

14. Process according to Claim 12 or 13, **characterized in that** the expansion of the microspheres is started at a temperature which is below the expansion start temperature of the microspheres used as indicated by the microsphere manufacturer.

15. Process according to Claim 14, **characterized in that** the expansion of the microspheres is started at at least 8°C below, preferably from 10°C to 25°C below, the expansion start temperature thereof.

## Revendications

1. Procédé de fabrication d'une matière polymère expansée syntactique, de préférence d'une matière adhésive sensible à la pression, selon lequel
a) au moins la majorité des cavités de mousse fermées est obtenue par l'introduction de microballons expansibles dans un matériau de matrice, puis le mélange dans un appareil de mélange (1), et
b) l'expansion des microballons expansibles a lieu après leur introduction dans le matériau de matrice,
**caractérisé en ce que**
c) la distribution de température dans l'appareil de mélange (1) est non homogène dans un plan de coupe perpendiculaire à la direction de transport de cet appareil (1),
d) dans une coupe perpendiculaire à la direction de transport de l'appareil de mélange (1), une première surface (3) délimitant la chambre de mélange (2) de l'appareil de mélange (1) est portée à une température suffisamment élevée pour que la matière polymère contenue dans les microballons, dans la mesure où celle-ci est en contact avec cette première surface délimitante (3), atteigne la température (T_{E}) qui est suffisante pour le démarrage et l'avancée de l'expansion,
e) tandis que, dans la même coupe perpendiculaire à la direction de transport de l'appareil de mélange (1), une deuxième surface (4) délimitant la chambre de mélange (2) de l'appareil de mélange (1) est portée à une température suffisamment basse pour que la matière polymère contenue dans les microballons, dans la mesure où celle-ci est en contact avec cette deuxième surface délimitante (4), n'atteigne pas la température (T_{E}) qui est suffisante pour le démarrage et l'avancée de l'expansion.

2. Procédé selon la revendication 1, **caractérisé en ce que**
f) cet appareil de mélange (1) est une extrudeuse à vis planétaires,
- et ses composants, une broche centrale à denture extérieure (5) et une couronne à denture intérieure (7), sont portés à différentes températures au moins dans un plan de section transversale, de telle sorte que
- la matière polymère contenue dans les microballons, dans la mesure où celle-ci est en contact avec le premier de ces deux composants (5 ou 7), atteigne la température (T_{E}) qui est suffisante pour le démarrage et l'avancée de l'expansion,
- tandis que la matière polymère contenue dans les microballons, dans la mesure où elle est en contact avec le deuxième de ces deux composants (7 ou 5), n'atteigne pas la température (T_{E}) qui est suffisante pour le démarrage et l'avancée de l'expansion.

3. Procédé selon la revendication 2, **caractérisé en ce que**
- la couronne à denture intérieure (7) de l'extrudeuse à vis planétaires (1) est portée à une température suffisamment élevée pour que la matière polymère contenue dans les microballons, dans la mesure où celle-ci est en contact avec cette couronne (7), atteigne la température (T_{E}) qui est suffisante pour le démarrage et l'avancée de l'expansion,
- tandis que la broche centrale à denture extérieure (5) est portée à une température suffisamment basse pour que la matière polymère contenue dans les microballons, dans la mesure où celle-ci est en contact avec cette broche centrale (5), n'atteigne pas la température (T_{E}) qui est suffisante pour le démarrage et l'avancée de l'expansion.

4. Procédé selon la revendication 2, **caractérisé en ce que**
- la couronne à denture intérieure (7) de l'extrudeuse à vis planétaires (1) est portée à une température suffisamment basse pour que la matière polymère contenue dans les microballons, dans la mesure où celle-ci est en contact avec cette couronne (7), atteigne la température (T_{E}) qui est suffisante pour le démarrage et l'avancée de l'expansion,
- tandis que la broche centrale à denture extérieure (5) est portée à une température suffisamment élevée pour que la matière polymère contenue dans les microballons, dans la mesure où celle-ci est en contact avec cette broche centrale (5), n'atteigne pas la température (T_{E}) qui est suffisante pour le démarrage et l'avancée de l'expansion.

5. Procédé selon la revendication 1, **caractérisé en ce que** la différence de température entre la première surface (3) délimitant la chambre de mélange (2) de l'appareil de mélange et la deuxième surface (4) délimitant la chambre de mélange (2) de l'appareil de mélange est d'au moins 50 °C, de préférence comprise entre 65 °C et 90 °C.

6. Procédé selon les revendications 3 et 5, **caractérisé en ce que** la différence de température entre la couronne plus chaude (7) et la broche centrale plus froide (5) est d'au moins 50 °C, de préférence comprise entre 65 °C et 90 °C.

7. Procédé selon la revendication 6, **caractérisé en ce que** le matériau de matrice contient des polymères et, en tant que polymère de base de la matrice, des acrylates et/ou des méthacrylates sont utilisés, éventuellement en plus d'une résine augmentant l'adhésivité.

8. Procédé selon les revendications 4 et 5, **caractérisé en ce que** la différence de température entre la couronne plus froide (7) et la broche centrale plus chaude (5) est d'au moins 50 °C, de préférence comprise entre 65 °C et 90 °C.

9. Procédé selon la revendication 8, **caractérisé en ce que** le matériau de matrice contient des polymères et, en tant que polymère de base de la matrice, du polyéthylène et/ou du polypropylène et/ou du polyéthylène-acétate de vinyle et/ou du polypropylène-acétate de vinyle et/ou des copolymères de certains ou de tous les monomères mentionnés sont utilisés, éventuellement en plus d'une résine augmentant l'adhésivité.

10. Procédé selon la revendication 7, **caractérisé en ce que** le polymère de base de la matrice est introduit dans la zone d'entrée de l'extrudeuse à vis planétaires (1) au niveau de la broche centrale froide (5).

11. Procédé selon la revendication 9, **caractérisé en ce que** le polymère de base de la matrice est introduit dans la zone d'entrée de l'extrudeuse à vis planétaires (1) au niveau de la broche centrale chaude (5).

12. Procédé selon la revendication 1, **caractérisé en ce que** les microballons expansibles sont tout d'abord suspendus dans de l'eau avant leur introduction dans la matière polymère, et restent dans cet environnement aqueux pendant au moins 12 h avant l'introduction de cette suspension eau-microballons dans la matière polymère formant la matrice et le mélange.

13. Procédé selon la revendication 12, selon lequel du noir de carbone est incorporé dans la matière polymère, **caractérisé en ce que** le noir de carbone est tout d'abord émulsifié ou suspendu dans de l'eau, puis les microballons sont suspendus dans cette émulsion ou suspension noir de carbone-eau, avant l'introduction de cette suspension noir de carbone-eau-microballons dans la matière polymère formant la matrice et le mélange.

14. Procédé selon la revendication 12 ou 13, **caractérisé en ce que** l'expansion des microballons est démarrée à une température qui est inférieure à la température de démarrage de l'expansion des microballons utilisés indiquée par le fabricant des microballons.

15. Procédé selon la revendication 14, **caractérisé en ce que** l'expansion des microballons est démarrée au moins 8 °C, de préférence 10 °C à 25 °C, en dessous de leur température de démarrage de l'expansion.
